# EUROPEAN PATENT APPLICATION

(11) **EP 4 458 554 A1**
(43) Date of publication of application: **06.11.2024**
(21) Application number: 23386031.1
(22) Date of filing: 02.05.2023
(51) Int. Cl.: B29C 64/124, B29C 64/188, B29C 64/232, B29C 64/241, B29C 64/245, B29C 64/30, B33Y 30/00, B33Y 40/20

(54) **MULTIPLE-AXIS HYBRID-MANUFACTURING MACHINE TOOL**

(71) Applicant: National and Kapodistrian University of Athens, 10561 Athens (GR); Krimpenis, Agathoklis, 11147 Athens (GR); Tzivelekis Charalampos, Newcastle NE65TE (GB); Sgardelis, Pavlos, Tyne and Wear NE53XA (GB)
(72) Inventor: Sgardelis, Pavlos, Newcastle Upon Tyne, Tyne and Wear NE53XA (GB); Krimpenis, Agathoklis, 11147 Athens (GR); Tzivelekis, Charalampos, Newcastle, NE65TE (GB)
(74) Representative: Kouzelis, Dimitrios

(57) **Abstract**

A multiple-axis hybrid manufacturing machine tool (1) for manufacturing a three-dimensional part, in particular a micro-part and/or a macro-part with a microfeature. The multiple-axis hybrid manufacturing machine tool (1) extends in a first direction (1001), a second direction (1002) and a third direction (1003) that are perpendicular to each other. The multiple-axis hybrid manufacturing machine tool (1) comprises a vat photopolymerization three-dimensional printing module (100), a container module (200), a CNC processing module (300) and a platform module (400). The vat photopolymerization three-dimensional printing module (100) comprises a movable illumination device (101). The container module (200) comprises at least one photopolymer receiving container (201) for receiving a photopolymer material in liquid phase. The CNC processing module (300) comprises a movable spindle (301) for holding a milling tool (10) and/or a measuring tool. The platform module (400) comprises a movable build platform (401) that is arranged and configured for vat photopolymerization three-dimensional printing of a work piece and/or on a work piece, and preferably also for CNC processing of a work piece, on the build platform (401).

## Description

The present invention refers to a multiple-axis hybrid manufacturing machine tool for manufacturing a three-dimensional part, in particular a micro-part and/or a macro-part with a micro-feature.

Micro-parts manufacturing, as well as macro-parts with micro-features, made of multiple materials, not metallic in bulk, in large numbers is traditionally performed using successive tools such as photomasks, molds and dies in controlled environments. This is more so when sensitive materials and structures are involved to avoid contamination, as is the typical production case for electronics, biomedical devices, and medical tools. In these production systems, part quality, accuracy and structural integrity is highly dependent on tooling and automation robustness; the involved costs, though, rise exponentially with smaller part dimensions and higher dimensional accuracy. When oneoff or small to medium batches are needed, this mass production method is inefficient, owing to the high costs related with mold making, sophisticated automation, controlled environment, and material handling.

In the growing market of prototyping and production of customized micro-parts for research and highvalue industrial sectors, such as electronics, aerospace and medical/biomedical sector, small batches of very high quality are sometimes needed just-in-time or companies are operating with low working capital inventory models. Subtractive manufacturing is a proven manufacturing technology over the last four to five decades in a multitude of sectors for all material types, providing high-end, accurately finished parts. Additive manufacturing involves promising manufacturing technologies, which are already implemented in a variety of industrial sectors with high success-rate (e.g., medical), although it presents certain limitations for micro-feature and micro-part production. For multi-material micro-parts, these include low level of repeatability, limited part materials, poor system design and control, difficulty in achieving high accuracy internal part features and in implementing quality protocols and measurements, especially when enclosed features are concerned.

It is thus an object of the present invention to provide a solution for manufacturing a three-dimensional part, in particular a micro-part and/or a macro-part-part with a micro-feature.

This object is achieved by a multiple-axis hybrid manufacturing machine tool with the features of the independent claim. The dependent claims contain advantageous developments of the present invention.

The multiple-axis hybrid manufacturing machine tool for manufacturing a three-dimensional part, in particular a micro-part and/or a macro-part with a micro-feature, comprises a vat photopolymerization three-dimensional printing module, a container module, a CNC processing module and a platform module. The vat photopolymerization three-dimensional printing module comprises a movable illumination device. The container module comprises at least one photopolymer receiving container for receiving a photopolymer in liquid phase. The CNC processing module comprises a movable milling spindle for holding a milling tool and/or a measuring tool. The platform module comprises a movable build platform that is arranged and configured for vat photopolymerization three-dimensional printing of a work piece and/or on a work piece on the build platform. In other words, the movable build platform is arranged and configured such that a work piece can be three-dimensionally printed (is three-dimensionally printable) on the build platform and/or it can be three-dimensionally printed on a work piece placed on the build platform by the vat photopolymerization three-dimensional printing module. Preferably, the movable build platform is also arranged and configured for CNC processing of a work piece on the build platform. In other words, the movable build platform is also arranged and configured such that a CNC process can be performed on a work piece placed on the build platform.

The multiple-axis hybrid manufacturing machine tool extends in a first direction, a second direction and a third direction that are perpendicular to each other. The first direction, the second direction and the third direction are in particular parallel to a first axis, a second axis and a third axis of a three-dimensional Cartesian coordinate system attached to the machine tool, in particular to a support body, more specifically to a support frame, of the machine tool. The first direction, the second direction and the third direction can also be characterized as first extension direction, second extension direction and third extension direction. It is understood that the expression "extends in a first direction, second direction and third direction" does not imply a specific shape of the machine tool but simply is used to define the first direction, the second direction and the third direction. When the multiple-axis hybrid manufacturing machine tool is placed on a surface for use and/or during use, i.e., with its operation setup orientation, the first direction corresponds to a longitudinal direction (first horizontal direction), the second direction to a lateral direction (second horizontal direction) and the third direction to a vertical direction.

The multiple-axis hybrid manufacturing machine tool of the present invention has the advantage that it can provide repeatable, accurate, efficient, and high-productivity manufacturing of highly detailed parts with enclosures and complex micro-features, the production of which includes at least one additive manufacturing stage or carried out in multiple forming stages. The multiple-axis hybrid manufacturing machine tool enables, as a single machine, high precision fast prototyping and small-to-medium batch production of finalized non-metallic high complexity micro-parts or macro-parts with micro-features without the need for molds and dies, clean/sterile environment operations for the manufacture of microelectromechanical systems (MEMS), embedded systems, medical and biomedical devices/appliances/tools (lab-on-a-chip, surgical tools and others), orthopaedical implants, orthodontic tools, or other engineering parts and systems, all of which can be multi-material and/or multi-functional. These would otherwise opt for transferring the part to various processing and post-processing units through manual, semi-automatic or automated handling and resetting it up in each with the hazard of contaminating/fouling the part, and with inaccuracies resulting from multi set-ups and without increase in set-up times. On the other hand, the proposed multiple-axis hybrid manufacturing machine tool allows the production of the aforementioned parts at single set-up in a single machine that reducing or eliminating the risk of contaminations and inaccuracies.

A machine tool is understood as a machine within the context of the present invention and should thus not be confused with a single tool such as a cutting tool, e.g., a milling tool. Further, within the context of the present invention, the term "hybrid manufacturing" means that the machine tool 1 is configured such that it can perform an additive manufacturing process and a subtractive manufacturing process.

It is noted that within the context of the present invention a three-dimensional part is advantageously understood as the final product after manufacturing steps have been performed on a work piece. It thus becomes apparent that the term "work piece" is advantageously used within the context of the present invention for describing the part before its final state. In particular, a bulk raw material can also be considered as a work piece. For example, a three-dimensional part may be manufactured by printing a work piece by the vat photopolymerization three-dimensional printing module, wherein the work piece is then processed by the CNC processing module. The three-dimensional part may also be manufactured by using a work piece on which a feature can be printed and/or which can be processed by the CNC processing module.

Further, within the context of the present invention, a micro-part is preferably a three-dimensional part (final product) with at least two out of its three dimensions, in particular with all its three dimensions, being equal to or smaller than 10 millimetres, and in particular with tolerances within the range of 0.1 micrometre to 50 micrometres. Within the context of the present invention, a macro-part is preferably considered as a three-dimensional part (final product) with at least two out of its three dimension, in particular with all its three dimensions, being larger than 10 millimetres. Similarly to the micro-part, a micro-feature is preferably a feature with at least two out of its three dimensions, in particular with all its three dimensions, being equal to or smaller than 10 millimetres, and in particular with tolerances within the range of 0.1 micrometre to 50 micrometres.

It is further noted that the term "build platform" can also be characterized as "table" within the context of the present invention, in particular when associated with the CNC processing module.

It is noted that the term "CNC processing" comprises cutting, in particular milling, and/or measuring within the context of the present invention.

Preferably, the movable build platform is configured to linearly move in the third direction. When the machine tool is arranged with its operation setup orientation, this means that the build platform is configured to linearly move in the vertical direction. Preferably, the linear movement of the build platform in the third direction is continuously controllable.

Preferably, the movable build platform is configured to rotate around the second direction, in particular around the lateral direction, when the machine tool is arranged with its operation setup orientation. Advantageously, the movable build platform can also be configured to move around the third direction, in particular around the vertical direction, when the machine tool is arranged with its operation setup orientation. Preferably, the rotational movement of the build platform around the third direction, and in particular also around the second direction, is continuously controllable.

Within the context of the present invention, a continuous control of a movement of a component in particular means that the component is fully controlled along its path from a start position to an end position. This can in particular be done with encoders and the supporting control means.

The movable build platform may preferably be controllable such that it linearly moves in the third direction and simultaneously rotates around the second direction and/or such that it simultaneously rotates around the third direction and the second direction and/or such that it linearly moves in the third direction and simultaneously rotates around the third direction.

When a component is controlled to move and/or rotate simultaneously in different directions and/or around different directions and/or in a direction and around a direction means within the context of the present invention that the component makes these movements simultaneously, i.e., at the same time, and not in series in order to achieve a desired positioning in three-dimensional space and that the movements are continuously controllable.

Preferably, the movable build platform is interchangeable. This means in particular that the movable build platform is releasably arranged in the platform module. Thus, the user can remove it when the manufacturing of a part is finished, while another platform can be loaded on the machine tool. The new platform can be either an empty platform for any subsequent vat photopolymerization three-dimensional printing step or a platform with a work piece, in particular a bulk raw material, for any subsequent vat photopolymerization three-dimensional printing or CNC cutting operation.

Advantageously, the movable build platform is configured to support a work piece to be processed by the milling tool and/or measured by the measuring tool.

Advantageously, the platform module is a single platform module. Preferably, the platform module comprises a single build platform. Thus, the machine tool can have a very compact design.

The movable illumination device is preferably configured to linearly move in the third direction, in particular in the vertical direction, when the machine tool is arranged with its operation setup orientation. This configuration has the advantage that focusing and in particular autofocusing of the illumination device at different focal lengths for variable projection area and resolution can be achieved. Preferably, the movable illumination device is also configured to linearly move in the second direction, in particular in the lateral direction, when the machine tool is arranged with its operation setup orientation. By the movement of the illumination device in the second direction, an increased projection area can be obtained for larger parts in a plane defined by the first direction and the second direction. The linear movement of the movable illumination device in the third direction, and in particular also in the second direction, is/are controllable continuously or in steps or in an indexed manner.

A control of a movement of a component in an indexed manner or in other words an indexed movement of a component or that a component is indexed means within the context of the present invention in particular that the component must be moved to a certain position before processing, wherein the path from a start position to the end position (the certain position) is not fully controlled. This means in particular that only the start position and the end position are controlled, for example with switches or low-resolution encoders.

Preferably, the illumination device is controllable such that it moves simultaneously in the third direction and the second direction.

The at least one photopolymer receiving container is configured to linearly move in the first direction, in particular in the longitudinal direction, when the machine tool is arranged with its operation setup orientation. Preferably, the at least one photopolymer receiving container is indexed in the first direction. In other words, the at least one photopolymer receiving container is configured to linearly move in an indexed manner in the first direction. The indexed movement of the at least one photopolymer receiving container has the advantage of a simplified control since only discrete positions of the at least one photopolymer receiving container are controlled.

Preferably, the container module comprises at least one material receiving container for receiving a washing liquid and/or a coating agent.

The at least one container is preferably configured to linearly move in the first direction, in particular in the longitudinal direction, when the machine tool is arranged with its operation setup orientation. Preferably, the at least one container is indexed in the first direction. In other words, the at least one container is configured to linearly move in an indexed matter in the first direction. The indexed movement of the at least one container has the advantage of a simplified control since only discrete positions of the at least one container are controlled.

Preferably, the at least one photopolymer receiving container and the at least one container are configured such they are linearly movable and/or indexed together in the first direction. This has the advantage of a simplified control of the movement of the at least one photopolymer receiving container and the at least one container. To this end, the container module may preferably comprise a container support having receiving regions for receiving the at least one photopolymer receiving container and the at least one container.

The milling spindle is preferably configured to linearly move in the first direction and/or in the second direction, in particular in the longitudinal direction and/or lateral direction, when the machine tool is arranged with its operation setup orientation. A linear movement of the milling spindle in the first direction and/or in the second direction may advantageously be continuously controlled. The milling spindle is preferably configured to rotate around the third direction. The rotary movement of the milling spindle around the third direction may advantageously be continuously controlled.

Preferably, the milling spindle may be controlled to linearly move simultaneously in the first and second direction. The milling spindle may preferably be controlled to linearly move in the first and/or second direction and simultaneously rotate around the third direction.

Instead of the milling spindle being configured to linearly move in the first direction, the milling spindle can advantageously be configured to move in a fourth direction that is inclined with respect to the first direction. "Inclined" means that the fourth direction forms an angle with the first direction that is larger than 0 degrees and less than 90 degrees. It is understood that the fourth direction lies on a plane defined by the first direction and the third direction. A linear movement of the milling spindle in the fourth direction may advantageously be continuously controlled. The milling spindle is preferably configured to rotate around a fifth direction that is perpendicular to the fourth direction and the second direction. The rotary movement of the milling spindle around the fifth direction may advantageously be continuously controlled. In particular, the CNC processing module can be arranged in the machine tool in an inclined position with respect to the first direction and to the plane defined by the first direction and the second direction. A milling spindle axis may in other words be inclined with respect to the first direction and to the plane defined by the first direction and the second direction.

Preferably, the milling spindle may be controlled to linearly move simultaneously in the fourth and second direction. The milling spindle may preferably be controlled to linearly move in the fourth and/or second direction and simultaneously rotate around the fifth direction.

Further, the milling spindle is preferably configured to drive, i.e., controllably rotate, the milling tool, around a milling spindle axis for performing a cutting process on a work piece. In particular, the cutting process may be one-, two- or three-dimensional.

Preferably, the multiple-axis hybrid-manufacturing machine tool further comprises a post-processing module. The post-processing module preferably comprises a UV-light illumination device and/or a fluid providing means for providing a fluid. The fluid can preferably be a compressed gas, in particular compressed air. It is also possible that a mixture of gas and liquid in droplets is used as a fluid. The fluid is provided so that dust and/or chips or any other particles, in particular produced during a cutting process performed by the CNC processing module can be removed from a printed and/or processed work piece.

The post-processing module may preferably comprise a housing, in which the UV-light illumination device and/or a fluid providing means are arranged.

Preferably, the housing is configured to block UV-light. Thus, UV-light illuminated by the UV-light illumination device or at least most of it cannot escape to the outside of the housing and in particular the outside of the machine tool.

Advantageously, the housing of the post-processing module is stationary. This means in particularthat the housing does not move relative to the support body, in particular the support frame, of the machine tool.

Preferably, the CNC processing module is arranged on a first side of the platform module in the first direction. Preferably, the post-processing module is arranged on a second side of the platform module in the first direction. This arrangement has the advantage of a compact design of the machine tool.

Preferably, the multiple-axis hybrid manufacturing machine tool further comprises an extrusion and/or inkjet printhead module with a head mount arrangement. The head mount arrangement comprises at least one movable head mount for mounting at least one head, wherein the at least one head comprises an extrusion print head and/or an inkjet print head. The extrusion and/or inkjet printhead module may also be characterized as head module within the context of the present invention.

The at least one movable head mount is preferably configured to linearly move in the first direction and/or the second direction, in particular in the longitudinal direction and/or lateral direction, when the machine tool is arranged with its operation setup orientation. Preferably, the linear movement of the at least one head mount in the first direction and/or the second direction is continuously controllable.

The at least one head mount may preferably be controlled to linearly move in the first direction and/or the second direction simultaneously with the aforementioned linear and/or rotational movement of the build platform. For these simultaneous movements, a control means of the machine tool is configured to control the at least one head mount and the build platform accordingly.

The at least one head can preferably also comprise a laser head and/or a syringe for bio-plotting.

Advantageously, the head mount arrangement may comprise a plurality of head mounts for mounting a plurality of heads. In particular, the plurality of heads can comprise heads of the same type and/or different types. According to an advantageous embodiment, the head mount arrangement comprises at least one head mount for mounting at least one extrusion print head, at least one head mount for mounting at least one inkjet print head, at least one head mount for mounting at least one laser head and at least one head mount for mounting at least one syringe for bio-plotting.

The head mount(s) is/are arranged such that it/they faces/face the platform module.

In particular, a head mount and the corresponding head are formed such that a longitudinal axis of the corresponding head extends in the third direction. More specifically, a head mount and a corresponding extrusion print head are advantageously formed such that the extrusion material is extruded in the third direction in a mounted state of the extrusion print head to the head mount. More specifically, a head mount and a corresponding inkjet print head are advantageously formed such that the inkjet material is ejected in the third direction in a mounted state of the inkjet print head to the head mount. More specifically, a head mount and a corresponding laser head are advantageously formed such that the laser beam is emitted in the third direction in a mounted state of the laser head to the head mount. More specifically, a head mount and a corresponding syringe for bio-plotting are advantageously formed such that the bio-plotting material is ejected in the third direction in a mounted state of the syringe to the head mount.

According to an advantageous embodiment, the vat photopolymerization three-dimensional printing module is arranged on a first side of the platform module in the third direction and the extrusion and/or inkjet printhead module is arranged on a second side of the platform module in the third direction. This configuration enables the machine tool to be compact in the third direction.

Within the context of the present invention, the expression that a first module is arranged on a first side of the platform module and a second module on a second side of the platform module in a corresponding direction means that the first module is arranged in a first subspace and the second module in a second subspace in the corresponding direction that are separated from each other by the platform module.

Advantageously, the illumination device is arranged such that light is emitted towards the platform module, in particular upwards, when the machine tool is arranged with it operation setup orientation.

Preferably, the multiple-axis hybrid manufacturing machine tool further comprises an automatic tool change module. The automatic tool change module is configured to receive a plurality of tools, in particular a plurality of holders configured to hold the plurality of tools. The plurality of tools preferably at least one milling tool and/or at least one measuring tool. Advantageously, the automatic tool change module comprises a rotary disc configured to rotate (be rotated) around the second direction, in particular around the lateral direction when the machine tool is arranged with its operation setup orientation. The rotation around the second direction preferably occurs in an indexed manner. For receiving the plurality of tools, the rotary disc may preferably comprise a plurality of receiving arms that are configured to receive the plurality of the holders. The plurality of tools may preferably comprise at least two tools. Accordingly, the plurality of holders and the plurality of the receiving arms may preferably comprise at least two holders and at least receiving arms, respectively.

Advantageously, the multiple-axis hybrid manufacturing machine tool may further comprise a support body, in particular a support frame. The vat photopolymerization three-dimensional printing module, the container module, the CNC processing module and the platform module are advantageously attached to the support body, in particular the support frame. The platform module, the post-processing module, the extrusion and/or inkjet printhead module and the automatic tool change module are advantageously attached to the support body. Advantageously, each module of the multiple-axis hybrid manufacturing machine tool is attached to the support body. A respective module can be directly or indirectly attached to the support body. "Directly" means that the corresponding module is itself attached to the support body, while "indirectly" means that the corresponding module is directly attached to another module which is directly attached to the support body.

Preferably, the multiple-axis hybrid manufacturing machine tool comprises a sealable and closable chamber, inside which the vat photopolymerization three-dimensional printing module, the container module, the CNC processing module and the platform module are arranged. To this end, the support body is configured accordingly. Preferably, the container module, the post-processing module and the automatic tool change module are also arranged inside the chamber. In particular, each module of the multiple-axis hybrid manufacturing machine tool is arranged inside the sealable and closable chamber. Thus, the corresponding manufacturing steps for manufacturing a three-dimensional part using the multiple-axis hybrid manufacturing machine tool can be performed in a closed and sealed environment that cannot be contaminated by the surrounding environment of the machine tool.

Advantageously, the multiple-axis hybrid manufacturing machine tool further comprises a control means for controlling the vat photopolymerization three-dimensional printing module and/or the container module and/or the CNC processing module and/or the platform module and/or the post-processing module and/or the automatic tool change module. It is understood that the control means is advantageously configured to control the above describe movements of the different components of the modules of the machine tool. Preferably, the control means is configured for controlling each module of the multiple-axis hybrid manufacturing machine tool. The control means is preferably sealed off the chamber, i.e., arranged outside the chamber. The control means is in particular arranged in an electronics compartment that is sealed off the chamber.

Within the present invention, the expression "configured to move" with regard to the movable components of the modules (build platform, illumination device, photopolymer receiving container(s), material receiving container(s), milling spindle, head mount) can in particular be understood as "configured to be moved by a moving (driving) means". To this end, a corresponding module comprises a moving means that is operably connected to the corresponding movable component for achieving a movement of the movable component of a module in a specific direction or around a specific direction. Any of the moving means can be electromechanical and/or electromagnetic and/or pneumatic and/or hydraulic or in other words comprise electromechanical and/or electromagnetic and/or pneumatic and/or hydraulic components.

The build platform is preferably moved in the third direction by a platform module moving means. The platform module moving means advantageously comprises a driving element, in particular an electric motor.

The build platform is preferably rotated around the second direction by a driving element, in particular an electric motor. In this case, the corresponding moving (driving) means corresponds to the driving element.

The illumination device is preferably moved in the third direction by a first illumination device moving means. The first illumination device moving means advantageously comprises a driving element, in particular an electric motor. The illumination device is preferably moved in the second direction by a second illumination device moving means. The second illumination device moving means advantageously comprises a driving element, in particular an electric motor.

The photopolymer receiving container and in particular also the material receiving container is/are preferably moved in the first direction by a container module moving means. The container module moving means advantageously comprises a driving element, in particular an electric motor.

The milling spindle is preferably moved in the first direction by a first CNC processing module moving means. The first CNC processing module moving means advantageously comprises a driving element, in particular an electric motor.

The milling spindle is preferably moved in the second direction by a second CNC processing module moving means. The second CNC processing module moving means advantageously comprises a driving element, in particular an electric motor.

The milling spindle is preferably rotated around the third direction by a driving element, in particular an electric motor. In this case, the corresponding moving (driving) means corresponds to the driving element.

The head mount(s) is/are preferably moved in the first direction by a first printhead moving means. The first printhead moving means advantageously comprises a driving element, in particular an electric motor.

The head mount(s) is/are preferably moved in the second direction by a second printhead moving means. The second printhead moving means advantageously comprises a driving element, in particular an electric motor.

Any of the aforementioned linear movements, in particular all the aforementioned linear movements, may be advantageously guided movements. This means in particular that a guiding means is provided for guiding the respective component that is linearly movable.

According to an advantageous embodiment, the machine tool is configured such that the movable build platform is configured to linearly move in the third direction and rotate around the third direction, the milling spindle is configured to linearly move in the first direction (or fourth direction) and the second direction, the movable illumination device is configured to linearly move in the third direction, the at least one photopolymer receiving container is configured to linearly move in the first direction and the at least one head mount is configured to linearly move in the first direction and the second direction. According to a preferred embodiment, the machine tool is further configured such that at least one of the following applies: the movable build platform is further configured to rotate around the second direction, the milling spindle is further configured to rotate around the third direction (or the fifth direction, when the milling spindle is configured to linearly move in the fourth direction), the movable illumination device is further configured to linearly move in the second direction, and at least one material receiving container for receiving a washing liquid and/or a coating agent is configured to linearly move in the first direction.

The present invention refers further to a use of the previously described multiple-axis hybrid manufacturing machine tool for manufacturing a three-dimensional part, in particular a micro-part and/or a macro-part with a micro-feature. In other words, the present invention refers to a method of manufacturing a three-dimensional part, in particular a micro-part and/or a macro-part with a micro-feature, by using the previously described multiple-axis hybrid manufacturing machine tool.

The method may preferably comprise a step of vat photopolymerization three-dimensional printing of and/or on a work piece by means of the vat photopolymerization three-dimensional printing module and/or a step of performing a cutting process on a work piece by means of the CNC processing module. The method may preferably comprise a step of measuring a parameter, in particular a geometric or surface parameter, of the work piece manufactured by the vat photopolymerization three-dimensional printing and/or the cutting process.

If the method comprises a vat photopolymerization three-dimensional printing step, the method may preferably comprise a step of hardening/curing the printed work piece. If the method comprises a cutting process performed after the vat photopolymerization three-dimensional printing step, namely on the printed work piece, the step of hardening may preferably be performed before the cutting process.

Any of the above-described modules of the machine tool, in particular all the above-described modules, may advantageously be interchangeable. This means in particular that a corresponding module is releasably fixed to the support body, in particular the support frame.

It is noted that any of the components of a module of the machine tool of the present invention can also be referred to by using the term used for the corresponding module in front of the existing term used. For example, a guiding means of the CNC processing module can also be characterized as a CNC processing module guiding means. In case of more than one component with the same or a similar function in the same module, the terms "first", "second" etc. can be used. For example, if the CNC processing module comprises two guiding means, these can be characterized as a first CNC processing module guiding means and a second CNC processing module guiding means.

These and further details, advantages and features of the present invention will be described based on embodiments of the invention and by taking reference to the accompanying figures. Identical or equivalent elements and elements which act identically or equivalently are denoted with the same reference signs. Not in each case of their occurrence a detailed description of the elements and components is repeated.
Figure 1 shows a perspective view of a multiple-axis hybrid manufacturing machine tool having a plurality of modules attached to a support body according to a first embodiment of the present invention.
Figure 2 shows a front view of the multiple-axis hybrid manufacturing machine tool of figure 1.
Figure 3 shows a perspective view of the multiple-axis hybrid manufacturing machine of figure 1 without the support body.
Figure 4 shows a front view of the multiple-axis hybrid manufacturing machine tool of figure 1 without the support body.
Figure 5 shows a perspective view of a part of the multiple-axis hybrid manufacturing machine tool of figure 1.
Figure 6 shows a perspective view of a part of the multiple-axis hybrid manufacturing machine tool of figure 1.
Figure 7 shows a perspective view of a part of the multiple-axis hybrid manufacturing machine tool of figure 1.
Figure 8 shows a perspective view of a part of the multiple-axis hybrid manufacturing machine tool of figure 1.
Figure 9 shows a perspective view of a part of the multiple-axis hybrid manufacturing machine tool of figure 1.
Figure 10 shows a perspective view of a part of the multiple-axis hybrid manufacturing machine tool of figure 1.
Figure 11 shows a perspective view of a part of the multiple-axis hybrid manufacturing machine tool of figure 1.
Figure 12 shows a schematic view of a part of the multiple-axis hybrid manufacturing machine tool according to the first embodiment of the present invention.
Figure 13 shows a perspective view of a part of a multiple-axis hybrid manufacturing machine tool according to a second embodiment of the present invention.
Figure 14 shows a perspective view of a part of a multiple-axis hybrid manufacturing machine tool according to a third embodiment of the present invention.
Figure 15 shows a schematic view of a part of a multiple-axis hybrid manufacturing machine tool according to a fourth embodiment of the present invention.

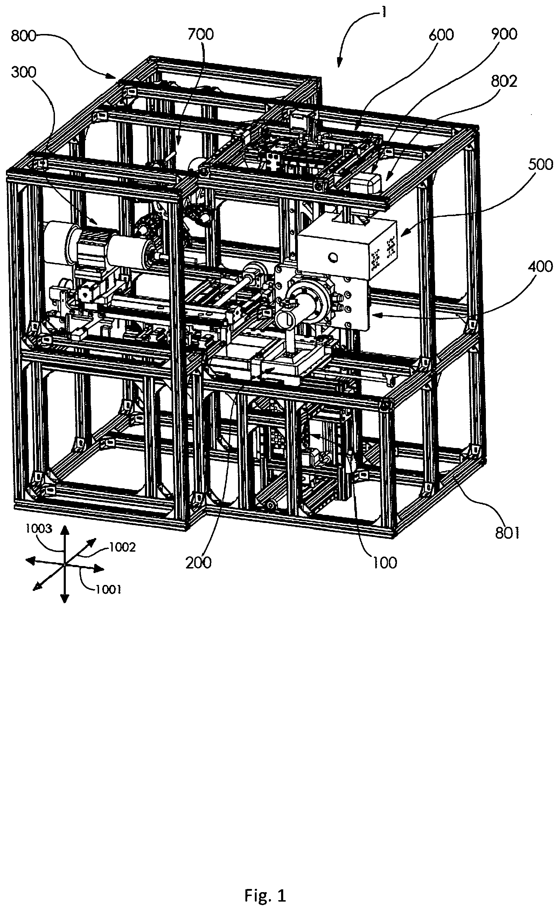

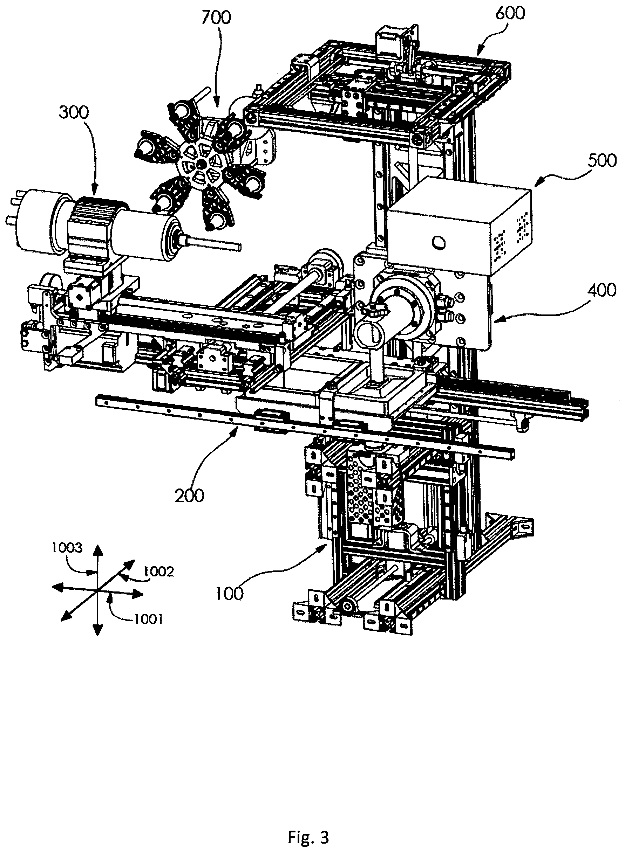

In the following, a multiple-axis hybrid manufacturing machine tool 1 for manufacturing a three-dimensional part, in particular a micro-part and/or a macro-part with a micro-feature, according to an embodiment of the present invention is described in detail with reference to figures 1 to 12.

As can be seen from figures 1 to 4, the multiple-axis hybrid manufacturing machine tool 1 extends in a first direction 1001, a second direction 1002 and a third direction 1003, and comprises a vat photopolymerization three-dimensional printing module 100, a container module 200, a CNC processing module (computer numerically controlled processing module) 300, a platform module 400, a post-processing module 500, an extrusion and/or inkjet printhead module 600, an automatic tool change module 700 and a support body 800.

When the multiple-axis hybrid manufacturing machine tool 1 is placed on a surface for use, i.e., with its operation setup orientation, and/or during use, the first direction 1001 corresponds to a longitudinal direction, the second direction 1002 to a lateral direction and the third direction 1003 to a vertical direction. The machine tool 1 can in particular be designed as a desktop machine tool 1. Figures 1 to 11 show the machine tool 1 and its modules 100 to 700 in their operation setup orientation.

The support body 800 comprises a support frame 801, to which each of the aforementioned modules 100 to 700 is attached. In particular, the modules 100 to 700 are directly or indirectly attached to the support body 800. "Directly" means that the corresponding module is itself attached to the support body 800, in particular its support frame 801, while "indirectly" means that the corresponding module is directly attached to another module which is in turn directly attached to the support body 800.

The support body 800 is configured such that the multiple-axis hybrid manufacturing machine tool 1 comprises a sealable and closable chamber 802, inside which all the aforementioned modules 100 to 700 are arranged. In particular, the support body 800 may be provided with exterior surfaces, e.g., made of poly-methyl-methacrylate (PMMA), or any other transparent thermoplastic polymer derived from methyl methacrylate, that close the openings formed by the support frame 802 in a sealed manner. The machine tool 1 further comprises an electronics compartment that has all the electronics needed for controlling the machine tool 1. The electronics compartment is advantageously sealed off of the chamber 802, i.e. outside of the chamber 802. In particular, it is arranged on a back side of the support body 800.

The machine tool 1 advantageously comprises at least one access point, in particular a door, for accessing the chamber 802. The access point is closable and sealable so that, under operation, the machine tool 1 is sealed and closed. Thus, all the manufacturing steps for manufacturing a three-dimensional part using the multiple-axis hybrid manufacturing machine tool 1 can be performed in a closed and sealed environment that cannot be contaminated by the surrounding environment of the machine tool 1. In order to enhance this effect and achieve a sterile environment inside the chamber 802, the machine tool 1 may further comprise at least one disinfecting unit 900. The at least one disinfecting unit 900 may comprise at least one HEPA filter for filtering out dust and particles, as well as at least one UV-light module with proper wavelength for sterilization purposes. The surfaces of the support body 800 are preferably configured such that they block UV-light.

The vat photopolymerization three-dimensional printing module 100 is used for performing vat photopolymerization three-dimensional printing of a work piece and comprises a movable illumination device 101 for this purpose. The extrusion and/or inkjet printhead module 600 can be used for extrusion and/or inkjet printing on a work piece.

The container module 200 comprises at least one photopolymer receiving container 201 for receiving a photopolymer in liquid phase that can be illuminated by the movable illumination device 101 for photopolymerization three-dimensional printing of a work piece.

The CNC processing module 300 comprises a movable spindle 301 for holding a milling tool for performing a cutting process on a work piece and/or a measuring tool for measuring the work piece. The tool being held by the spindle 301 can be changed by the automatic tool change module 700.

The post-processing module 500 can be used for post-processing of a work piece printed by the vat photopolymerization three-dimensional printing module 100 and/or by the extrusion/inkjet three-dimensional printing, and/or processed by the milling tool of the CNC processing module 300.

The platform module 400 comprises a single movable build platform 401 that is arranged and configured for vat photopolymerization three-dimensional printing of and/or on a work piece, and in particular also CNC processing of a work piece, on the build platform 401. This means on one hand that a work piece can be printed on the build platform 401 or a feature can be printed on an existing work piece placed on the build platform 401 by illuminating the liquid photopolymer by the movable illumination device 101. On the other hand, the printed work piece or another work piece placed on the build platform 401 can be processed by the milling tool or measured by the measuring tool of the CNC processing module 300, while being on the build platform 401.

The platform module 400 is also arranged and configured for extrusion and/or inkjet printing. This means that the extrusion and/or inkjet printing on the work piece can be performed while the work piece is placed on the build platform 401. In addition, the build platform 401 is arranged and configured such that the work piece printed by the vat photopolymerization three-dimensional printing module 100 and/or processed by the milling tool of the CNC processing module 300 can be post-processed at the post-processing module 500 while it is placed/is on the build platform 401.

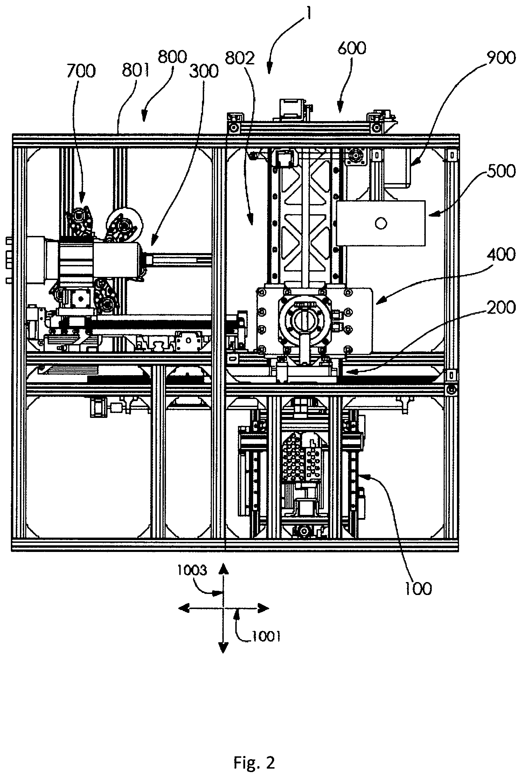

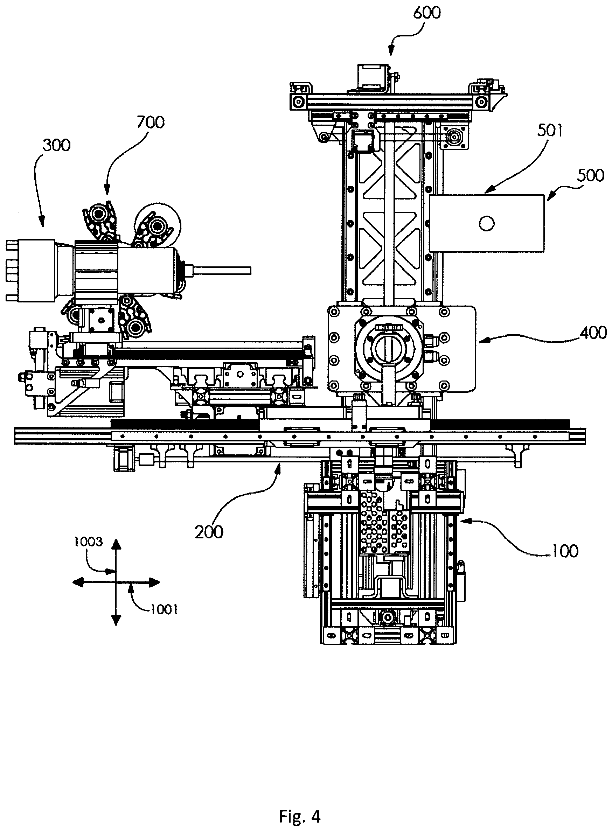

As can further be seen from figures to 1 to 4, the vat photopolymerization three-dimensional printing module 100 is arranged on a first side of the platform module 400 in the third direction 1003 and the extrusion and/or inkjet printhead module 600 on a second side of the platform module 400 in the third direction 1003. The CNC processing module 300 is arranged on a first side of the platform module 400 in the first direction 1001 and the post-processing module 500 on a second side of the platform module 400 in the first direction 1001. In other words, when looking in particular at figures 2 and 4, that is, in the operation setup orientation of the machine tool 1, the vat photopolymerization three-dimensional printing module 100 is arranged on a lower side of the platform module 400, i.e., below the platform module 400, and the extrusion and/or inkjet printhead module 600 on an upper side of the platform module 400, i.e., above the platform module 400. Accordingly, the CNC processing module 300 is arranged on a left side of the platform module 400 and the post-processing module 500 on a right side of the platform module 400.

Thus, the platform module 400 and in particular the single build platform 401 is positioned centrally with regard to the vat photopolymerization three-dimensional printing module 100, the extrusion and/or inkjet printhead module 600, the CNC processing module 300 and the post-processing module 500. In other words, the vat photopolymerization three-dimensional printing module 100, the extrusion and/or inkjet printhead module 600, the CNC processing module 300 and the post-processing module 500 are arranged in such a way that they surround the platform module 400 and in particular the single build platform 401. This arrangement allows the machine tool 1 to be very compact.

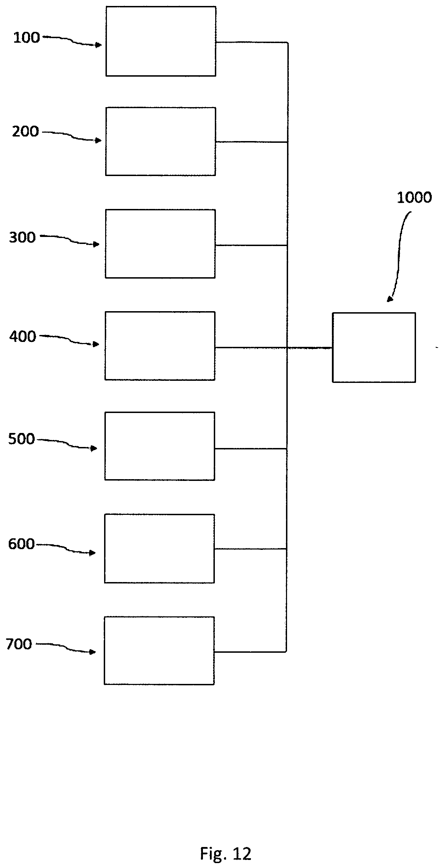

For controlling the multiple-axis hybrid manufacturing machine tool 1, in particular all its modules 100 to 700, the machine tool 1 comprises a control means 1000, as shown in figure 12. The control means 1000 is advantageously arranged in the electronics compartment and thus sealed off of the chamber 802.

In the following, the modules 100 to 700 will be explained in more details.

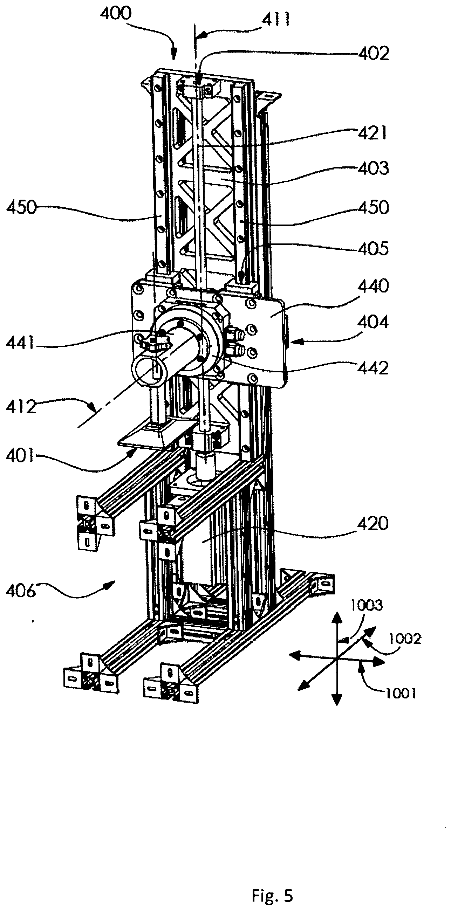

Figure 5 shows a perspective view of the platform module 400.

As mentioned above, the movable build platform 401 is arranged and configured such that a three-dimensional work piece can be printed on the movable build platform 401 and processed by a milling tool and/or measured by a measuring tool mounted to the milling spindle 301 of the CNC processing module 300.

In particular, the movable build platform 401 is configured to linearly move in the third direction 1003 and to rotate around the second direction 1002.

For moving the build platform 401 in the third direction 1003, the platform module 400 advantageously comprises a platform module moving means 402 and a build platform support 404. The build platform support 404 is advantageously configured to support the build platform 401 and is movably arranged on a plate 403. The plate 403 is part of the platform module 400 and directly attached to the support frame 801 of the machine tool 1, in particular to vertical frame columns of the support frame 801.

The build platform support 404 advantageously comprises a base 440 and an arm 441. The arm 441 is arranged on the base 440 and configured to hold the build platform 401 and rotate it around the second direction 1002. In particular, the arm 441 is configured such that it allows a rotation of the build platform 401 over an angular range of 360 degrees around the second direction 1002. The rotation of the build platform 401 around the second direction 1002 is advantageously achieved by an electric motor 442 (first platform module electric motor) being operably arranged between the arm 441 and the base 440.

The platform module moving means 402 is configured to move the build platform support 404 in the third direction 1003. In particular, the platform module moving means 402 comprises an electric motor 420 (second platform module electric motor) and a motion transmitting means 421 that is configured to translate the rotary motion of the electric motor 420 to a linear motion of the build platform support 404, more specifically of the base 440, in the third direction 1003. Particularly, the motion transmitting means 421 is fixed to the plate 403 and comprises a linear actuating element 421 connected to the base 440. The linear actuating element 421 is advantageously formed as a power screw, in particular ball screw, extending in the third direction 1003.

In order to support and guide the base 400 during its movement in the third direction 1003, the platform module 400 advantageously further comprises a guiding means 405. The guiding means 405 comprises two linear guides 450, which extend in the third direction 1003 and on which the base 404 is slidably arranged, in particular via corresponding blocks attached to the base 404 and slidably arranged on the liner guides 450, in the third direction 1003. Only one linear guide 450 or more than two linear guides 450 can also be provided in the guiding means 405.

The movement of the build platform 401 in the third direction 1003 can be considered as a movement of the build platform 401 along a first platform-module directional axis 411 of the platform module 400 that is parallel to the third direction 1003. Thereby, a motorized axis that extends in the third direction 1003, i.e., a vertical motorized axis, is provided in the platform module 400. The first platform-module directional axis 411 may also be characterized as a main Z axis of the machine tool 1.

Accordingly, the rotation of the build platform 401 around the second direction 1002 can be considered as a rotation of the build platform 401 around a second platform-module directional axis 412 of the platform module 400 that is parallel to the second direction 1002. Thereby, a rotational motorized axis 412 around the second direction 1002 that may also be characterized as a main B axis of the machine tool 1 is provided in the platform module 400.

The control means 1000 is configured to continuously control the linear movement of the build platform 401 in the third direction 1003 and the rotational movement of the build platform 401 around the third direction 1003. To this end, the control means 1000 is configured to control the electric motor 420 and the electric motor 442, respectively.

In particular, the control means 1000 is configured to control the build platform 401 such that it simultaneously performs a linear movement in the third direction 1003 and a rotational movement around the third direction 1003.

The platform 401 is interchangeable. This means that the platform 401 is releasably fixed to the arm 441. Thus, the user can remove the platform 401 from the arm 441 when the desired three-dimensional part is manufactured and attach a new platform 401 to the machine tool 1. In particular, a new empty platform 401 can be loaded for any subsequent vat photopolymerization three-dimensional printing process for manufacturing a new three-dimensional part. Alternatively, the new platform 401 can be provided with a bulk raw material or substrate for any subsequent vat photopolymerization three-dimensional printing and/or CNC cutting operation for manufacturing a new three-dimensional part.

When the build platform 401 is used for vat photopolymerization three-dimensional printing, i.e., when a work piece is three-dimensionally printed on the build platform 401 by the vat photopolymerization three-dimensional printing module 100, the build platform 401, in particular a build surface on which the work piece is printed, faces the vat photopolymerization three-dimensional printing module 100, in particular its illumination device 101.

As can further be seen from figure 5, the platform module 400 comprises an attaching region 406 to which the vat photopolymerization three-dimensional printing module 100 is attached.

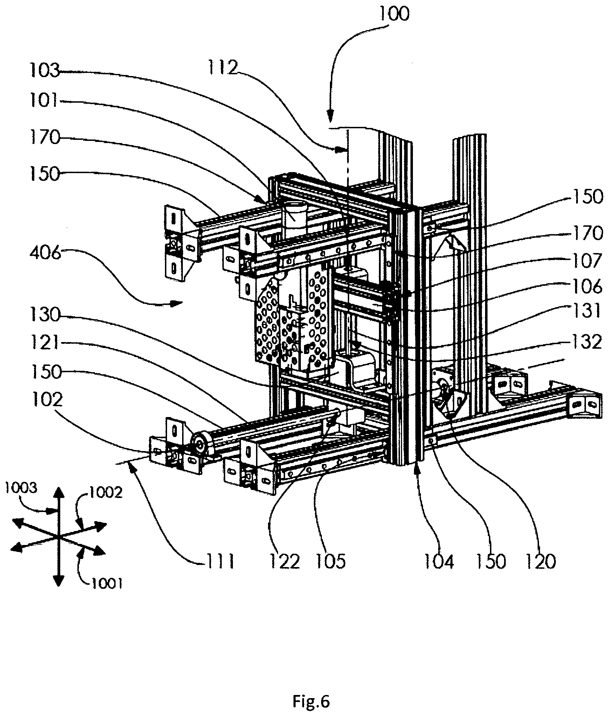

Figure 6 shows a perspective view of the vat photopolymerization three-dimensional printing module 100.

In particular, the vat photopolymerization three-dimensional printing module 100 may be formed as a stereolithography (SLA) module or a digital light processing (DLP) module. The illumination device 101 may comprise a DLP projector, in particular a high-resolution DLP projector, a UV-lamp or an LCD screen with a LED light source, and points towards the platform module 100 and in particular upwards when the machine tool 1 has its operation setup orientation. In other words, the illumination device 101 is arranged such that light is emitted towards the platform module 100 and in particular upwards, when the machine tool 1 is positioned on a surface with its operation setup orientation.

The movable illumination device 101 is advantageously attached to an illumination device frame 104 and configured to linearly move in the second direction 1002 and the third direction 1003. The movement of the illumination device 101 in the third direction 1003 is used for motorized focusing and in particular autofocusing of the illumination device 101 at different focal lengths for variable projection area and resolution. By the movement of the illumination device 101 in the second direction 1002, an increased projection area can be obtained for larger parts in a plane defined by the first direction 1001 and the second direction 1002.

The vat photopolymerization three-dimensional printing module 100 advantageously comprises a first illumination device moving means 103 for moving the illumination device base 106 in the third direction 1003 and a second illumination device moving means 102 for moving the illumination device frame 104 in the second direction 1002. It is noted that the configuration of the illumination device 101 being movable in the second direction 1002 is an advantageous option for the operation of the machine tool 1, as it increases the exposure area significantly and can provide continuous three-dimensional printing in the plane defined by the first direction 1001 and the second direction 1002.

The second illumination device moving means 102 advantageously comprises an electric motor 120 (second vat photopolymerization three-dimensional printing module electric motor) and a motion transmitting means 121 for translating the rotary motion of the electric motor 120 to a linear motion of the illumination device frame 104 in the second direction 1002. To this end, the motion transmitting means 121 advantageously comprises a linear actuating element 122 connected to the illumination device frame 104 for moving it in the second direction 1002. The linear actuating element 122 is advantageously formed as a power screw, in particular ball screw, extending in the second direction 1002.

For supporting and guiding the illumination device frame 104 in the second direction, the vat photopolymerization three-dimensional printing module 100 advantageously comprises a guiding means 105. The guiding means 105 advantageously comprises four linear guides 150 that extend in the second direction 1002 and on which the illumination device frame 104 is slidably arranged in the second direction 1002, in particular via blocks that are attached to the illumination device frame 104 and slidably arranged on the linear guides 150. The linear guides 150 are fixed to the attaching region 406 of the platform module 200.

The first illumination device moving means 103 advantageously comprises an electric motor 130 (first vat photopolymerization three-dimensional printing module electric motor) and a motion transmitting means 131 for translating the rotary motion of the electric motor 120 to a linear motion of the illumination device base 106 in the third direction 1003. The illumination device base 106 is linearly movably arranged on the illumination device frame 104. In particular, the motion transmitting means 131 advantageously comprises a linear actuating element 132 connected to the illumination device base 106 for moving it in the third direction 1003. The linear actuating element 132 is advantageously formed as a power screw, in particular ball screw, extending in the third direction 1003.

For supporting and guiding the illumination device base 106 in the third direction 1003, the vat photopolymerization three-dimensional printing module 100 advantageously comprises a further guiding means 107. The further guiding means 107 advantageously comprises two linear guides 170 that extend in the third direction 1003 and on which the illumination device base 106 is slidably arranged on the illumination device frame 104 in the second direction 1003. The linear guides 170 are fixed to the illumination device frame 104.

The movement of the illumination device 101 in the second direction 1002 can be considered as a movement of the illumination device 101 along a second printing-module directional axis 111 of the vat photopolymerization three-dimensional printing module 100 that is parallel to the second direction 1002. Thereby, a motorized axis that extends in the second direction 1002, i.e., a lateral motorized axis, is provided in the vat photopolymerization three-dimensional printing module 100. The second printing-module directional axis 111 may also be characterized as a secondary Y1 axis of the machine tool 1.

The movement of the illumination device 101 in the third direction 1003 can be considered as a movement of the illumination device 101 along a first printing-module directional axis 112 of the vat photopolymerization three-dimensional printing module 100 that is parallel to the third direction 1003. Thereby, a motorized axis that extends in the third direction 1003, i.e., a vertical motorized axis, is provided in the vat photopolymerization three-dimensional printing module 100. The first printing-module directional axis 112 may also be characterized as a secondary Z1 axis of the machine tool 1.

The control means 1000 is configured to control the linear movement of the movable illumination device 101 in the third direction 1003 and in the second direction 1002 continuously or in steps or in an indexed manner. In particular, the control means 1000 may be configured to control the movable illumination device 101 such that it simultaneously performs a linear movement in the third direction 1003 and in the second direction 1002.

The vat photopolymerization three-dimensional printing module 100 can advantageously perform photopolymerization three-dimensional printing with a resolution in a plane defined by the first direction 1001 and the second direction 1002 of 7.6 micrometers to 50 micrometers and a resolution of 1 micrometer to 100 micrometers in the third direction 1003.

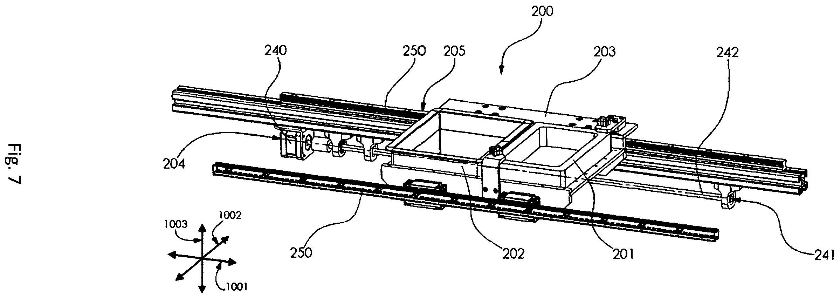

Figure 7 shows a perspective view of the container module 200.

As already described above, the container module 200 comprises the photopolymer receiving container 201 for receiving a photopolymer in liquid phase for vat photopolymerization three-dimensional printing.

In addition, the container module 200 comprises a material receiving container 202 for receiving a washing liquid such as ethanol, isopropanol or other solvents for wet work piece washing. An agitation or stirring means can advantageously be attached to or submerged in the material receiving container 202 for increasing work piece cleaning efficiency. For manufacturing a three-dimensional part made of multiple materials, it is also possible that the container module 200 comprises at least one further photopolymer receiving container 201 for receiving at least one further photopolymer in liquid phase. UV curable formulations, in particular curable by UV-light having a wavelength between 365 nanometers to 405 nanometers can be used as photopolymers.

It is also possible that the material receiving container 202 is used for receiving a coating agent for coating a work piece or that a plurality of material receiving containers 202 is provided in the container module 200 for receiving a coating agent and/or a washing liquid.

The photopolymer receiving container 201 and the material receiving container 202 are open containers facing with their open side towards the platform module 400 and in particular upwards when the machine tool 1 is positioned on a surface with its operation setup orientation. The photopolymer receiving container 201, which can also be called vat, has a transparent bottom such that light emitted by the illumination device 201 can go through and reach the photopolymer contained therein.

The photopolymer receiving container 201 and the material receiving container 202 are linearly movable in the first direction 1001. In particular, the photopolymer receiving container 201 and the material receiving container 202 are advantageously arranged on a container support 203 that has corresponding receiving regions for receiving the photopolymer receiving container 201 and the material receiving container 202. Thus, the photopolymer receiving container 201 and the material receiving container 202 are linearly movable together in the first direction 1001.

To this end, the container module 200 advantageously comprises a container module moving means 204 that is configured to move the container support 203 and thus the photopolymer receiving container 201 and the material receiving container 202.

The container module moving means 204 advantageously comprises an electric motor 240 (first container module electric motor) and a motion transmitting means 241. The motion transmitting means 241 advantageously comprises a linear actuating element 242 that is configured to translate the rotary motion of the electric motor 240 to a linear motion of the container support 203 and thus also of the photopolymer receiving container 201 and the material receiving container 202 in the first direction 1001. The linear actuating element 242 is advantageously formed as a power screw, in particular ball screw, extending in the first direction 1001.

The container module 200 advantageously further comprises a guiding means 205 for supporting and guiding the container support 203 while moving in the first direction 1001. In particular, the guiding means 205 comprises two linear guides 250 that extend in the first direction 1001 and are each arranged on a side of the container support table in the second direction . 1002. Thus, the photopolymer receiving container 201 and the material receiving container 202 are guided during their movement in the first direction 1001. It is also possible that only one or more linear guides 250 can also be provided

The photopolymer receiving container 201 and the material receiving container 202 are indexed. In other words, the control means 1000 is configured to control their linear movement in the first direction 1001 in an indexed manner. To this end, the control means 1000 is configured to control the electric motor 240 accordingly.

The container support 203 moving in the first direction 1001 provides a motorized axis that extends in the first direction 1001 and is called index X3 axis.

It becomes apparent from the description regarding the vat photopolymerization three-dimensional printing module 100, the container module 200 and the platform module 400 that the illumination device 101, the photopolymer receiving container 201 and the build platform 401 can be regarded as a vat photopolymerization three-dimensional printer with a bottom-up design. For printing a work piece, the build platform 401 is moved in the third direction towards the photopolymer receiving container 201 by means of the platform module moving means 402 and stopped at the height of a single layer of the work piece to be printed from the bottom of the photopolymer receiving container 201. The first layer of the photopolymer is cured by the illumination device 101 emitting light through the transparent bottom photopolymer receiving container 201. Then, the build platform 401 rises by means of the of the platform module moving means 402 such that the next layer is cured. This process is repeated until the work piece is printed on the build platform 401. It is noted that the printing process of the work piece can take place as a continuous process by the vat photopolymerization three-dimensional printing module 100 or in an interrupted manner, where two printing steps are interrupted by another process. In the latter case, a portion of the work piece may for example be printed, processed e.g., by the CNC processing module 300, and returned for the printing process to be completed.

When not being used, the photopolymer receiving container 201 and the material receiving container 202 are advantageously withdrawn towards, in particular underneath, the CNC processing module 300, so that the photopolymer receiving container 201 and the material receiving container 202 are protected from particles, dust, or machining chips. During a cutting process by the CNC processing module 300 and an extrusion or injection printing process, the photopolymer receiving container 201 and the material receiving container 202 can remain or moved underneath the CNC processing module 300 for avoiding anything falling into them (e.g. machining chips, drops of other materials, dust, etc.)

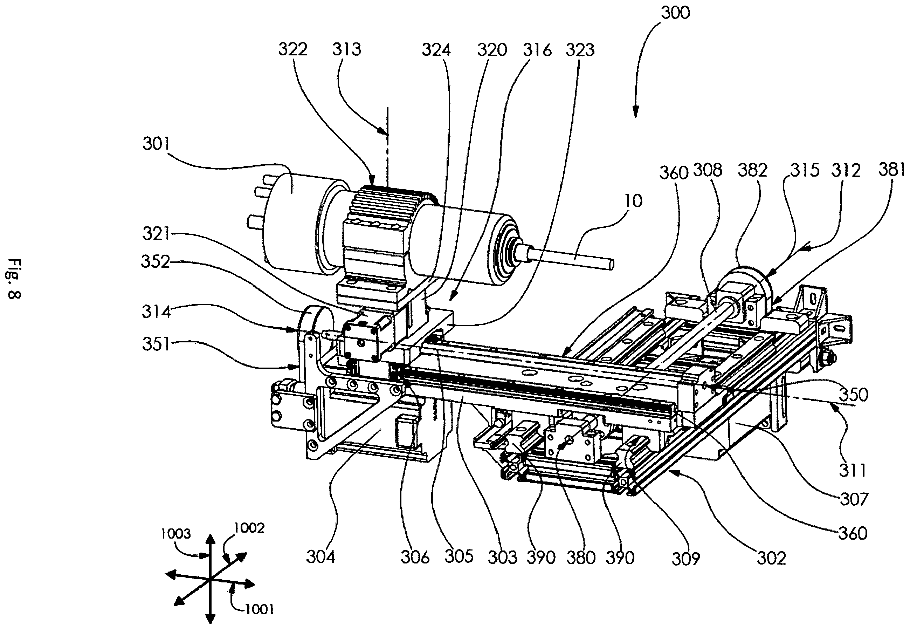

Figure 8 shows a perspective view of the CNC processing module 300.

The CNC processing module 300 comprises a movable milling spindle 301 for holding (engaging) a milling tool and/or a measuring tool such as a touch or optical probe. In particular, the milling spindle 301 is configured to linearly move in the first direction 1001 and the second direction 1002 and to rotate around the third direction 1003.

For moving in the first direction 1001 and the second direction 1002, the milling spindle 301 is advantageously movably arranged on a frame 302. More specifically, the milling spindle 301 is movably arranged on a support table 303 in the first direction 1001, while the support table 303 is in turn movably arranged on the frame 302 in the second direction 1002. The milling spindle 301 is in particular held by a milling spindle holder 322 connected to a milling spindle plate 324. The milling spindle plate 324 is advantageously arranged on a support plate 323, which is movably arranged on the support table 303 in the first direction 1001, thereby realising the movable arrangement of the milling spindle 301 on the support table 303 in the first direction 1001.

More specifically, for moving the milling spindle 301 in the first direction 1001, the CNC processing module 300 comprises a first CNC processing module moving means 314.

The first CNC processing module moving means 314 advantageously comprises an electric motor 304 (first CNC processing module electric motor) and a motion transmitting means 305 that is configured to translate the rotary motion of the electric motor 304 to a linear motion of the support plate 323 and thus to a linear motion of the milling spindle 301 in the first direction 1001.

For this purpose, the motion transmitting means 305 advantageously comprises a linear actuating element 350. The linear actuating element is advantageously formed as a power screw, in particular ball screw, extending in the first direction 1001 and driving the support plate 323.

Further, the motion transmitting means 305 advantageously comprises a belt 351 and two pulleys 352 arranged on the electric motor 304 and the linear actuating element 350, respectively, in order to transmit the rotary motion of the electric motor 304 to a linear motion of the support plate 323.

In order to further support and guide the milling spindle 301 during its movement in the first direction 1001, the CNC processing module 300 advantageously comprises a guiding means 306 with a pair of linear guides 360 extending in the first direction 1001. The number of the linear guides 360 can however vary. For example, only one or more linear guides 360 can be provided. In particular, the support plate 323 is slidably arranged on the support table 303, more specifically via blocks attached to the support plate 323 and slidably arranged on the support table 303.

The movement of the milling spindle 301 in the first direction 1001 can be considered as a movement of the milling spindle 301 along a first CNC processing module directional axis 311 of the CNC processing module 300 that is parallel to the first direction 1001. Thereby, a motorized axis that extends in the first direction 1001, i.e., a longitudinal motorized axis, is provided in the CNC processing module 300. The first CNC processing module directional axis 311 may also be characterized as a main X axis of the machine tool 1.

For moving the support table 303 and thus the milling spindle 301 in the second direction 1002, the CNC processing module 300 advantageously comprises a second CNC processing module moving means 315. The second CNC processing module moving means 315 advantageously comprises an electric motor 307 (second CNC processing module electric motor) and a motion transmitting means 308 configured to translate the rotary motion of the electric motor 307 to a linear motion of the support table 305 in the second direction 1002.

For this purpose, the motion transmitting means 308 advantageously comprises a linear actuating element 380. The linear actuating element 380 is advantageously formed as a power screw, in particular ball screw, extending in the second direction 1002 and being mounted to the frame 302. Further, the motion transmitting means 308 particularly comprises a belt 381 and two pulleys 382 arranged on the electric motor 307 and the linear actuating element 380, respectively, in order to transmit the rotary motion of the electric motor 307 to a linear motion of the support table 303.

In order to further support and guide the support table 303 in the first direction 1002, the CNC processing module 300 advantageously comprises a guiding means 309 with a pair of linear guides 390 extending in the second direction 1002. The support table 303 is in particular slidably arranged on the linear guides 390, more specifically via blocks attached to the support table 303 and slidably arranged on the linear guides 390.

The movement of the support table 303 in the second direction 1002 can be considered as a movement of the support table 303 along a second CNC processing module directional axis 312 of the CNC processing module 300 that is parallel to the second direction 1002. Thereby, a motorized axis that extends in the second direction 1002, i.e., a lateral motorized axis, is provided in the CNC processing module 300. The second CNC- processing module directional axis 312 may also be characterized as a main Y-axis of the machine tool 1.

Further, the milling spindle 301 is configured to rotate around the third direction 1003 for both bringing the milling spindle 301 to the proper position to release and grab a milling tool or measuring tool from the automatic tool change module 700 as well as for manufacturing of a three-dimensional part with curved moves. In particular, the milling spindle 301 is configured to rotate/be rotated around a third CNC processing module directional axis 313 that is parallel to the third direction 1003.

To this end, the CNC processing module comprises a third CNC processing module moving means 316. The third CNC processing module moving means 316 advantageously comprises an electric motor 321 (third CNC processing module electric motor) and a motion transmitting means 320. The motion transmitting means 320 advantageously comprises a rotary stage 320. The electric motor 321 can also be characterized as rotary stage motor.

Thereby, a rotational motorized axis around the third direction 1003 that may also be characterized as a secondary C1 axis of the machine tool 1 is provided in the CNC processing module 300.

The control means 1000 is configured to continuously control the linear movement of the milling spindle 301 in the first direction 1001 and in the second direction 1002 as well as the rotational movement of the milling spindle 301 around the third direction 1003 by controlling the corresponding electric motors 304, 307, 321 accordingly. In particular, the control means 1000 is configured to control the milling spindle 301 such that the milling spindle 301 can simultaneously perform at least two of the aforementioned movements, in particular all of the aforementioned movements. The rotation of the milling spindle 301 around the third direction simultaneously with the linear movements provides the advantage of multi-axis CNC machining, when combined with the linear movement of platform module moving means 402 and the rotary movement of electric motor 442.

In addition, it is understood that the milling spindle 301 is configured to drive or in other words controllably rotate a milling tool around a milling spindle axis (driving axis/longitudinal axis) for performing a cutting process on a work piece. Depending on the rotational position of the milling spindle 301 around the third direction 1003, a cutting process on a work piece on the movable build platform 401 can be performed when the milling spindle 301 is positioned such that its milling spindle axis is parallel to or forms an angle with the first direction 1001. In figure 8, a milling tool 10 is shown in mounted state to the milling spindle 301.

As mentioned above, the CNC processing module 300 is arranged on a first side of the platform module 400 in the first direction 1001. in particular, the milling spindle 301 faces the platform module 400, in particular when the milling spindle axis is parallel to the first direction 1001. The CNC processing module 300 is arranged in the machine tool 1 such that the milling spindle axis is always parallel to a plane defined by the first direction 1001 and the second direction 1002.

Further, the CNC processing module can advantageously perform a cutting process on a work piece with a maximum resolution of 1/10 micrometer in the first direction 1001, the second direction 1002 and around the third direction 1003. Thus, micro-parts of macro-parts with micro-features can be obtained by the CNC processing module.

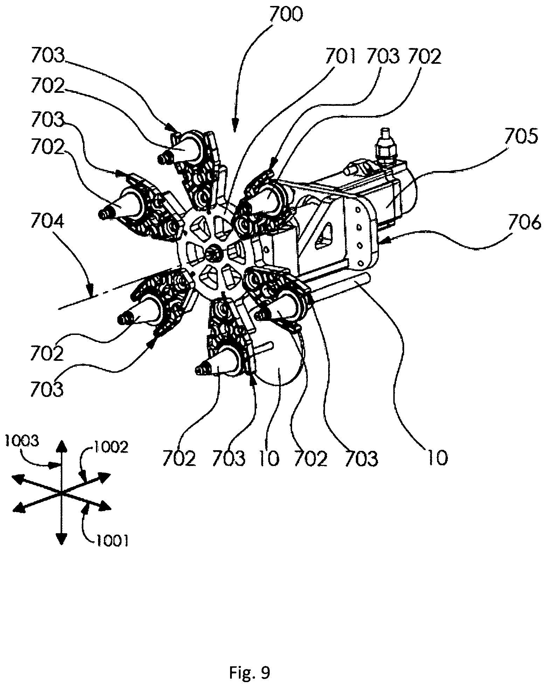

Figure 9 shows a perspective view of the automatic tool change module 700.

The automatic tool change module 700 comprises a rotary disc 701 with a plurality of holders 702 for holding a plurality of tools. The tools can be milling tools for removing material from a work piece and/or measuring tools for quality control and calibration purposes. The measuring tools can in particular be touch or optical probes.

In the present embodiment, the automatic tool change module 700 comprises six holders 702 for holding a corresponding number of tools. In figure 9, two of the holders 702 are shown being loaded with milling tools 10, while the remaining four holders 702 are not loaded with any tools. The number of the holders 702 can however vary.

The holders 702 are received in receiving arms 703 of the rotary disc 701 so that a rotation of the rotary disc 701 causes a rotation of the holders 702. In particular, the rotary disc 701 is configured to rotate/be rotated around the second direction 1002. The rotary disc 701 is particularly configured to rotate/be rotated around an automatic tool change module directional axis 704 that is parallel to the second direction 1002.

To this end, the automatic tool change module 700 comprises an electric motor (dedicated electric motor/automatic tool change module electric motor) 705 that is configured to rotate the rotary disc 701 in predetermined (fixed) positions. The electric motor 705 can in particular be a stepper or a servo motor. Thereby, a rotational motorized axis around the second direction 1002 that may also be characterized as an index B1 axis of the machine tool 1 is provided in the automatic tool change module 700. Mounting frame 706 is used for fixing the automatic tool change module 700 to the machine tool support frame 801.

As can be seen from figures 1 to 4, the automatic tool change module 700 is arranged on a side of the CNC processing module 300 in the second direction 1002. When the milling spindle 301 is arranged such that its milling spindle axis is parallel to the second direction 1002, the milling spindle 301 faces the automatic tool change module 700 so that an automatic change of the tool being held by the milling spindle 301 can take place.

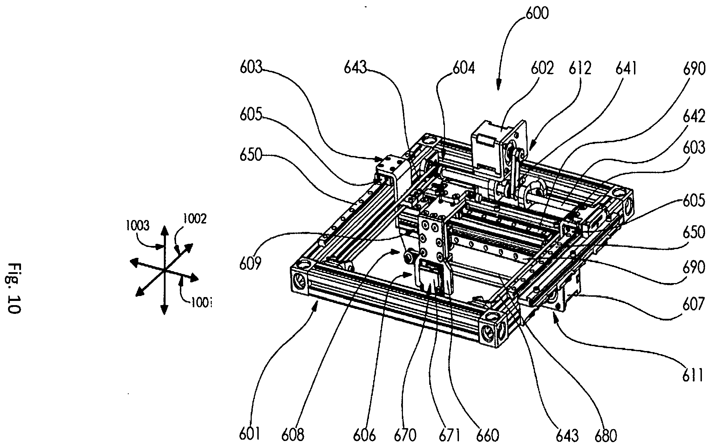

Figure 10 shows a perspective view of the extrusion and/or inkjet printhead module 600.

The extrusion and/or inkjet printhead module 600 advantageously comprises a frame 601 and a head mount arrangement 606 mounted to the frame 601 in a movable manner. In particular, the head mount arrangement 606 advantageously comprises a head mount 660 that can be formed for mounting a head 670. The head 670 is in particular an inkjet print head 671. Alternatively, the head 670 can be an extrusion print head. For the extrusion print head, solid polymer or polymer matrix composite filament/paste/pellets can be used, while for the inkjet print head 671, functional materials (e.g., silver, graphene, silicone), cell- and bio-inks, UV resins and any liquid formulation of tuned rheological properties can be used. In figure 10, the inkjet print head 671 is shown in a mounted state.

The head mount 660 is configured to move in the first direction 1001 and the second direction 1002. To this end, the head mount 660 is movably arranged on a support table 603 in the first direction 1001, while the support table 603 is movably arranged on the frame 601 in the second direction 1002.

In particular, the head mount 660 is supported and guided by a guiding means 609 attached to the support table 603. The guiding means 609 advantageously comprises two linear guides 690, which extend in the first direction 1001 and on which the head mount 660 is slidably arranged. In order to move the head mount 660 in the first direction 1001, the head mount 660 is more specifically attached to a belt 680, in particular a timing belt, of the motion transmitting means 608 that is configured to translate the rotary motion of an electric motor 607 (first printhead module electric motor) to a linear motion of the head mount 660 in the first direction 1001. The motion transmitting means 608 and the electric motor 607 are advantageously parts of a first printhead moving means 611. Thereby, a motorized axis that extends in the first direction 1001 is provided in the extrusion and/or inkjet printhead module 600. This axis may be characterized as a secondary X2 axis of the machine tool 1.

The support table 603 extends in the first direction 1001 and is advantageously supported and guided by a guiding means 605 attached to the frame 601. The guiding means 605 advantageously comprises two linear guides 650 that extend in the second direction 1002 and on which the support table 603 is slidably arranged. In order to move the support table 603 and thus the head mount 660 in the second direction 1002, the extrusion and/or inkjet printhead module 600 advantageously comprises a second printhead moving means 612. The second printhead moving means 612 advantageously comprises an electric motor 602 (second printhead module electric motor) and a motion transmitting means 604 that is configured to translate the rotary motion of the electric motor 602 to a linear motion of the support table 603 in the first direction 1001.

To this end, the motion transmitting means 604 particularly comprises a first belt 641, in particular a first timing belt, a rod 642, and two second belts 643, in particular two second timing belts. The first belt 641 is configured to transfer the rotary motion of the further electric motor 602 to the rod 642 that extends in the first direction 1001 and thus rotate the rod 642 around the first direction 1001. The rod 642 is in turn configured to rotate the two second belts 643, which are arranged in the second direction 1002 and to which the support table 603 is attached. The movement of the two second belts 643 causes the support table 603 to move in the second direction 1002. Thereby, a motorized axis that extends in the second direction 1002 is provided in the extrusion and/or inkjet printhead module 600. This axis may be characterized as a secondary Y2 axis of the machine tool 1.

The controls means 1000 is configured to continuously control the linear movement of the head mount 660 in the first direction 1001 and the second direction 1002. Further, the control means 1000 is configured to control the head mount 660 such that it linearly moves simultaneously in the first direction 1001 and the second direction 1002.

As mentioned above, the extrusion and/or inkjet printhead module 600 is arranged on a second side of the platform module 400 in the first direction 1001.

The extrusion and/or inkjet print head of the extrusion and/or inkjet printhead module 600 may for example perform extrusion and/or inkjet printing with a resolution of 10 micrometers to 80 micrometers in a plane defined by the first direction 1001 and the second direction 1002 and a resolution of 1 micrometer to 100 micrometers in the third direction 1003. Thus, micro-parts or micro-features of macro-parts can be printed by the extrusion and/or inkjet printhead module 600.

Thus, based on the aforementioned resolutions that may for example be achieved by the vat photopolymerization three-dimensional printing module 100, the CNC processing module 300 and the extrusion and/or inkjet printhead module 600, the multiple-axis hybrid manufacturing machine tool 1 may for example have a total combined minimum resolution of lower than 10 micrometers.

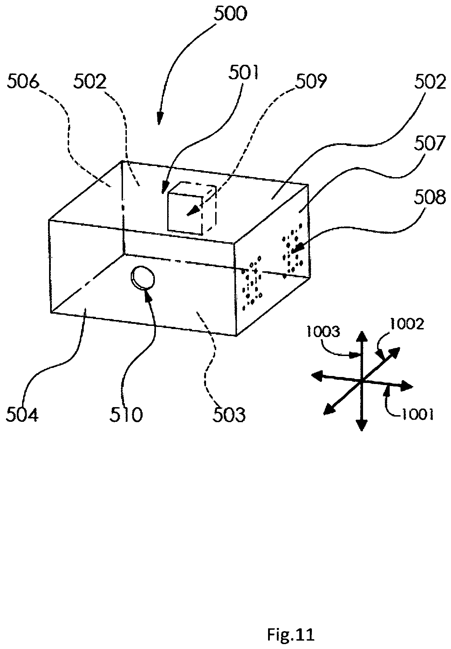

Figure 11 shows a perspective view of the post-processing module 500.

The post-processing module 500 is stationary, i.e., immovably fixed to the support body 801, and comprises a housing 501 (also indicated in figure 4), inside which a UV-light illumination device 508 and a fluid providing means 509 for providing a fluid, in particular a compressed gas, are arranged.

The UV-light illumination device 508 that particularly comprises a UV-light matrix is configured to illuminate a work piece placed inside the housing 501 with UV-light. In particular, the UV-light illumination device 508 is configured to illuminate a three-dimensionally printed work piece by the vat photopolymerization three-dimensional printing module 100 for curing (hardening) the work piece, in particular such that a cutting process can be performed on the work piece. To this end, the UV-light illumination device 508 is configured to emit UV-light of a corresponding wavelength. In particular, the UV-light may for example have a wavelength between 365 nanometers and 405 nanometers.

The fluid providing means 509 may comprise a compressor, a pipe and a nozzle for providing a compressed gas, in particular compressed air, inside the housing 501. The fluid providing means 509 is configured to provide the compressed gas on a work piece inside the housing 501 so that dust, chips or any other particles, in particular produced during a cutting process performed by the CNC processing module 300, can be removed from the work piece. The fluid providing means 509 can further comprise at least one HEPA filter so that the compressed gas is filtered.

The housing 501 is formed such that the build platform 401 can be inserted inside the housing 501. For this purpose, the build platform 401 can be rotated around the second direction 1002 and moved in the third direction 1003 towards the housing 501. In the present embodiment, the housing 501 is formed as a box having six sides, in particular a first side 502, a second side 503, a third side 504, a fourth side 505, a fifth side 506 and a sixth side 507. Four sides, in particular the first side 502, the third side 504, the fourth side 505, and the sixth side 507, are closed and formed by a material that blocks UV-light. The other two sides, in particular the second side 503 and the fifth 506, have openings that are closable by elastic means, in particular elastic curtains so as to allow the build platform 401 to enter the housing 501 and at the same time close the housing 501, thereby preventing UV-light reaching the environment of the machine tool 1 and in particular an operator (machinist) operating the machine tool 1. Alternative designs of the housing 501 are however also possible.

The housing 501 has a gas escape opening 510 for the compressed gas to have a way to escape the housing 501. It is also possible that the housing 501 has a plurality of gas escape openings 510. The gas escape opening 501 is in particular formed in the third side 504, and preferably has a circular opening.

The post-processing module 500 can be used for post-processing of a work piece printed by the vat photopolymerization three-dimensional printing module 100 and/or by the extrusion and/or inkjet printhead module 600, if the extrusion/inkjet material is photosensitive or needs to be blown by compressed air for cooling/cleaning between processes, and/or processed by the milling tool of the CNC processing module 300.

As mentioned above, for controlling the multiple-axis hybrid manufacturing machine tool 1, in particular all its modules 100 to 700, the machine tool 1 comprises the control means 1000. More specifically, the control means 1000 is configured to control the above described linear and rotational movements of all the moving/movable components of the modules 100 to 700, in particular by controlling their corresponding moving means, as well as the functional parameters of the components of the modules 100 to 700. The modules 100 to 700 and the control means 1000 communicate and exchange data with each other. For example, all the aforementioned motorized axes have encoders for position measuring. The measured positions are provided to the control means 1000 for controlling the motorized axes.

As mentioned above, the movable components of the modules 100 to 700 of the machine tool 1 can be controlled to execute simultaneous movements.

In particular, during milling and/or measuring (probing), the main X-axis (first CNC processing module directional axis 311), the main Y-axis (second CNC processing module directional axis 312) and the secondary C1 axis (rotational motorized axis around the third direction 1003) of the machine tool 1 (from the CNC processing module 300), and the Z main axis (first platform-module directional axis 411) and the main B axis (rotational motorized axis 412 around the second direction 1002) of the machine tool 1 (from the platform module 400) can be controlled to move simultaneously to perform up to 5-axis CNC machining.

During three-dimensional printing by the vat photopolymerization three-dimensional printing module 100, the secondary Y1 axis (first printing-module directional axis 111) and the secondary Z1 axis (second printing-module directional axis 112) of the machine tool 1 (from the vat photopolymerization three-dimensional printing module 100), and the Z main axis (first platform-module directional axis 411) and the main B axis (rotational motorized axis 412 around the second direction 1002) of the machine tool 1 (from the platform module 400) can be controlled to move simultaneously to perform 4-axis three-dimensional printing.

During inkjet printing, extrusion printing, laser processing or bio-plotting, the secondary X2 axis (motorized axis that extends in the first direction 1001) and the secondary Y2 axis ( motorized axis that extends in the second direction 1002) of the machine tool 1 (from the extrusion and/or inkjet printhead module 600), and the Z main axis (first platform-module directional axis 411) and the main B axis (rotational motorized axis 412 around the second direction 1002) of the machine tool 1 (from the platform module 400) can be controlled to move simultaneously to perform 4-axis inkjet printing, extrusion printing, laser processing or bio-plotting.

During automatic tool change, the main X-axis (first CNC processing module directional axis 311), the main Y-axis (second CNC processing module directional axis 312) and the secondary C1 axis (rotational motorized axis around the third direction 1003) of the machine tool 1 (from the CNC processing module 300) can be controlled to move simultaneously to change tools.

During wet washing or coating, the Z main axis (first platform-module directional axis 411) and the main B axis (rotational motorized axis 412 around the second direction 1002) of the machine tool 1 (from the platform module 400), and advantageously also the X3 index axis (motorized axis that extends in the first direction 1001) of the machine tool 1 (from the containers module 200) can be controlled to move simultaneously to clean or coat a work piece place on the build platform 401.

During curing or dry cleaning, the Z main axis (first platform-module directional axis 411) and the main B axis (rotational motorized axis 412 around the second direction 1002) of the machine tool 1 (from the platform module 400) can be controlled to move simultaneously to facilitate curing or cleaning of a work piece on the build platform 401.

The multiple-axis hybrid manufacturing machine tool 1 further comprises a high-level algorithm and a low-level algorithm. These algorithms exchange information and commands either to trigger events or as feedback regarding the process towards an operator of the machine tool 1. The algorithms are preferably stored in and executed by the control means.

The high-level algorithm corresponding to a graphics user interface (GUI) is advantageously an ad-hoc algorithm that can send commands for each of the aforementioned modules 100 to 700 individually (as a standalone module) but also carries out the process planning for 3D printing and machining the part by linking all the processes together. Commands from the high-level software are preferably sent serially via a USB port. These commands are sentences that contain a command followed by parameters. Preferably, G-Code and in particular also a custom made "pseudo-language" can be utilized for the different processes. The illumination device 101 is also directly controlled by the high-level software that projects one by one the layers for vat photopolymerization three-dimensional printing.

The low-level algorithm (firmware) receives the serial sentences from the high-level algorithm and executes them. Its role involves the functions of driving drive of the aforementioned electric motors, basic collision avoidance, knowledge of position of the aforementioned linearly and rotatably movable elements and bulk dimension of a work piece, reporting errors and positions back to the high-level algorithm, and holding and translating the part coordinates between different processing stations.

The multiple-axis hybrid manufacturing machine tool 1 of the present invention is a multi-stage numerically controlled hybrid manufacturing machine tool with a fully controlled rotating build platform 201 and enables the production of micro-parts or macro-parts with micro features, which can be made of more than one material, including polymers and inks with micro- or nanoparticles of metals and ceramics, in a single processing unit at a single set-up.

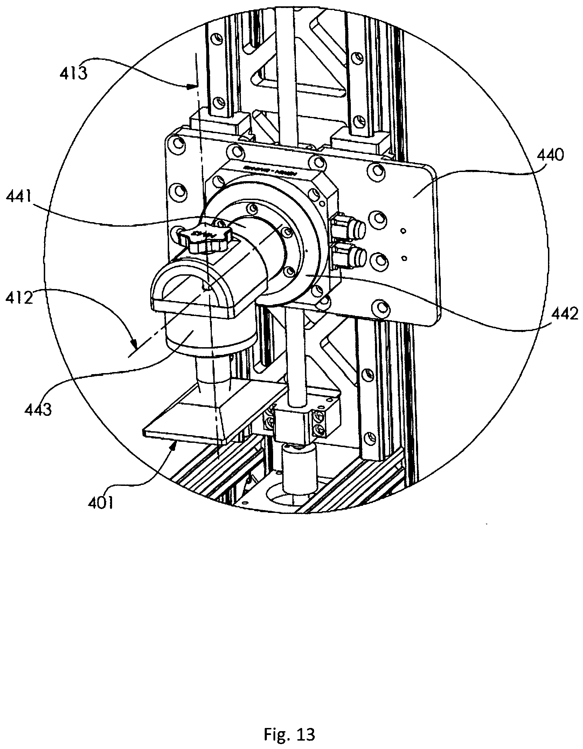

Figure 13 shows a perspective view of a part of a multiple-axis hybrid manufacturing machine tool 1 according to a second embodiment of the present invention.

A difference between the multiple-axis hybrid manufacturing machine tool 1 according to the second embodiment and that of the first embodiment lies in the design of the platform module 400. In particular, the movable build platform 401 in the machine tool 1 of the second embodiment is not only configured to linearly move in the third direction 1003 and rotate around the second direction 1002 but also configured to rotate around the third direction 1003. By doing so, a further degree of freedom is added for the build platform 401. In particular, the build platform 401 can be rotated over an angular range of 360 degrees around the third direction 1003.

To this end, an electric motor 443 (third platform module electric motor) is provided between the arm 441 and the build platform 401.

The rotation of the build platform 401 around the third direction 1003 can be considered as a rotation of the build platform 401 around a third platform-module directional axis 413 of the platform module 400 that is parallel to the third direction 1003. Thereby, a rotational motorized axis around the third direction 1003 that may also be characterized as a C main axis of the machine tool 1 is provided in the platform module 400. The configuration of the build platform 401 to rotate around the third direction 1003 is an advantageous optional feature and provides an additional functionality to the machine tool 1.

In addition to the control means 1000 being configured to continuously control the linear movement of the build platform 401 in the third direction 1003 and the rotational movement of the build platform 401 around the third direction 1003, the control means 1000 is also configured to continuously control the linear movement of the build platform 401 in the second direction 1002. To this end, the control means 1000 is configured to control the electric motor 442 accordingly.

In particular, the control means 1000 is configured to control the build platform 401 such that it simultaneously performs a linear movement in the third direction 1003 and a rotational movement around the third direction 1003 and/or a linear movement in the third direction 1003 and a rotational movement around the second direction 1002 and/or a rotational movement around the third direction 1003 and the second direction 1002.

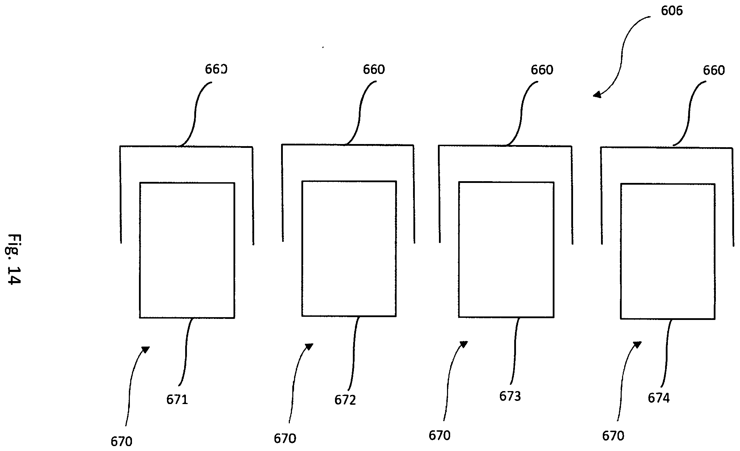

Figure 14 shows a simplified schematic view of a head mount arrangement 606 of an extrusion and/or inkjet print head module 600 of a multiple-axis hybrid manufacturing machine tool 1 according to a third embodiment of the present invention.

Though the head mount arrangements 606 of the extrusion and/or inkjet print head module 600 of the machine tool 1 of the first or second embodiment each comprise only one head mount 660, the head mount arrangement 606 of the extrusion and/or inkjet print head module 600 of the machine tool 1 of the third embodiment comprises a plurality of head mounts 660.

More specifically, the head mount arrangement 606 comprises four head mounts 660 for mounting four heads 670, in particular an inkjet print head 671, an extrusion print head 672, , a laser head 673 and a syringe 674 for bio-plotting. The number of head mounts 660 and/or the type of heads 670 can however vary. The head mounts 660 and thus the heads 670 are configured to move in the first direction 1001 and the second direction 1002. It is noted that figure 14 shows the heads 670 in a mounted state.

The plurality of head mounts 660 can be provided on the same support table 603 or on different support tables 603. In the former case, the head mounts 660 may be arranged in an array extending in the first direction 1001. In the latter case, the support tables 603 can be arranged parallel to each other.

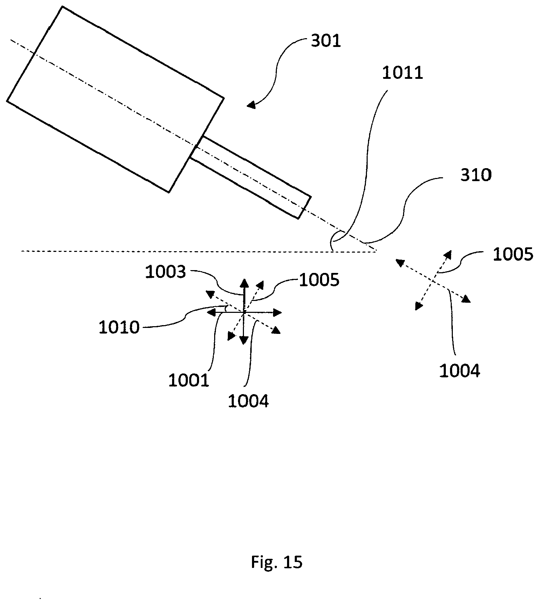

Figure 15 shows a schematic view of a part of a CNC processing module 300, in particular the milling spindle 301, of a multiple-axis hybrid manufacturing machine tool 1 according to a fourth embodiment of the present invention.

Instead of the milling spindle 301 being configured to linearly move in the first direction 1001 as is the case in the machine tools 1 of the previously described embodiments, the milling spindle 301 of the multiple-axis hybrid manufacturing machine tool 1 according to the fourth embodiment is configured to move in a fourth direction 1004 that is inclined with respect to the first direction 1001 or the plane defined by the first direction 1001 and the second direction 1002. The fourth direction 1004 lies in a plane defined by the first direction 1001 and the third direction 1003.

In other words, the fourth direction 1004 forms an angle 1010 with the first direction 1001 that is larger than 0 degrees and less than 90 degrees. For example, the angle may be 60 degrees. This angle 1010 corresponds to an angle 1011 between a milling spindle axis 310 and the plane defined by the first direction 1001 and the second direction 1002 (i.e., the horizontal plane, when the machine tool 1 is arranged with its operation setup orientation), when the milling spindle axis 310 lies in the plane defined by the first direction 1001 and the third direction 1003. The linear movement of the milling spindle 301 in the fourth direction 1004 may advantageously be continuously controlled.

For achieving the linear movement of the milling spindle 301 in the fourth direction 1004, the milling spindle 301 is advantageously tilted at the angle 1010 with respect to the first direction 1001. The tilted arrangement may have the advantage that more modules are provided in the machine tool 1 and/or that the machine tool 1 is more compact in the first direction 1001 due to the fact that this arrangement requires less space in the first direction 1001. It is understood that the components of the CNC processing module 300 responsible for the movement of the milling spindle 301 in the first direction 1001 and the rotation around the third direction 1003 in the machine tool 1 of the first embodiment are adapted such that the milling spindle 301 is linearly movable in the fourth direction 1004 and rotatable around the fifth direction 1005 in the machine tool 1 of the fourth embodiment. In particular, the components that extend and/or are movable in the first direction 1001 in the machine tool 1 of the first embodiment extend and/or are movable in the fourth direction 1004 in the machine tool 1 of the present embodiment. For example, the milling spindle plate 324 is advantageously arranged on a support plate 323, which is movably arranged on the support table 303 in the fourth direction 1004, thereby realising the movable arrangement of the milling spindle 301 on the support table 303 in the fourth direction 1004.

The milling spindle 301 may be further configured to rotate around a fifth direction 1005 that is perpendicular to the fourth direction 1004 and the second direction 1002. The rotary movement of the milling spindle 301 around the fifth direction 1005 may be continuously controlled.

The control means 1000 can be configured such that the milling spindle 301 is controllable such that it moves linearly simultaneously in the fourth direction 1004 and the second direction 1002. The control means 1000 can also be configured such that the milling spindle 301 is controllable such that it moves linearly in the fourth direction 1004 and/or the second direction 1002 and simultaneously rotate around the fifth direction 1005.

The multiple-axis hybrid manufacturing machine tool 1 according to the present invention has a plurality of advantages. It enables manufacturing of a three-dimensional part in multiple axes, in particular three, four or five axes, thus overcoming the inherent additive manufacturing drawback of building parts in planar and parallel layers. Further, it allows the use of multiple materials for single three-dimensional parts, which can also be of varying proportion volumetrically, thereby fully manipulating the respective functional properties of a part. In addition, the machine tool 1 of the present invention has the advantage that a multi-material three-dimensional part that requires various processing and post-processing steps can be manufactured without the need of moving and re-setting the part in different machines tools (machines). Thus, the machine tool 1 of the present invention minimizes dead/down times and set-up times, while it automatizes the overall process of manufacturing very complex parts with intricate features. In general, the manufacturing process can be optimized as a whole. Minimizing raw material usage and at the same time maximizing surface quality for both outer and inner feature surfaces of three-dimensional parts, which cannot be manufactured with traditional manufacturing methods, is also made possible with the machine tool 1 of the present invention.

The multiple-axis hybrid manufacturing machine tool 1 for manufacturing a three-dimensional part according to the present invention has further the advantage that it can be applied to a variety of fields. In particular, it can be used in toolless rapid prototyping of high-throughput biological lab-on-chip devices with embedded active elements for research and industry (e.g., Point-of-Care molecular diagnostics, organ-on-chip applications). Further, customized and readily packed high energy-density energy storage micro-devices and embedded electrical features for sensing and actuation, multi-material dental models of superior accuracy and repeatability with capability for real-time quality control and various high-resolution three-dimensional printed and/or micro-machined components/assemblies with or without functionally graded properties can be manufactured by using the multiple-axis hybrid manufacturing machine tool 1 of the present invention. Further interesting applications of the multiple-axis hybrid manufacturing machine tool 1 of the present invention comprise cell and bio-printing research applications with high functionality and repeatability and applications in material and biomaterial research (e.g., bioresorbable polymers/composites/hydrogels printing for tissue engineering). In addition, metamaterials, i.e., any material engineered to have a property that is not found in naturally occurring materials, can be produced by using the of the multiple-axis hybrid manufacturing machine tool of the present invention. Finally, the multiple-axis hybrid manufacturing machine tool 1 can be used for applicationoriented manufacturing, as the inherent modularity of the machine tool 1 and the flow-chart based user-friendly software enables the user to select manufacturing modules and design a multi-stage manufacturing process tailored to the application, introducing the concept of Manufacture-Driven Design (MaDD).

In the following, four sequencing examples of how the described multiple-axis hybrid manufacturing machine tool 1 according to the presented embodiments can be used are described.

A first sequencing example refers to the manufacturing of a lab-on-a-chip device, usually considered as macro-part with micro-features.

The photopolymer receiving container 201 is filled with a photopolymer in liquid state, e.g., resin. While facing towards the vat photopolymerization three-dimensional printing module 100 or in other words downwards, the build platform 401 is moved down to the bottom of the photopolymer receiving container 201, aligned and fixed. The illumination device 101 is focused by moving the illumination device 101 in the third direction 1003 by means of the first illumination device moving means 103. Three-dimensional printing of a three-dimensional work piece corresponding to a base of the lab-on-chip device can then be performed. If the footprint of the work piece on a plane defined by the first direction 1001 and the second direction 1002 is larger than the projection of the illumination device 101, the illumination device 101 is moved in the second direction 1002 by means of the second illumination device moving means 102 to expose more photopolymer to the illuminated light. After the required number of photopolymerization three-dimensional printing steps, the build platform 401 is moved upwards by the platform module moving means 402. The material receiving container 202 containing a washing liquid is then moved beneath the build platform 401 by using the container module moving means 204. The build platform 401 is then lowered by the platform module moving means 402 inside the material receiving container 202 and a moving/tilting cycle to remove non-polymerized material from the work piece is used. Then, the build platform 401 is lifted and rotated right so that it enters the housing 501 of the post-processing module 500. When the work piece is inside the housing 501, the UV-light illumination device 508 is used to radiate the work piece by UV-light to fully polymerize the work piece. The build platform 401 is then rotated to the left to face the milling spindle 301 of the CNC processing module 300. The milling spindle 301 loaded with a milling tool can be used for cutting/cleaning-up/engraving inner features of the work piece as well as the outer surface of the work piece. The build platform 401 is then rotated to the right to enter again the housing 501 of the post-processing module 500. When the work piece is inside the housing 501, the fluid providing means 509 provides compressed air to remove machined chips from the work piece. The build platform 401 is rotated upwards to face the extrusion and/or inkjet printhead module 600. The extrusion head is then used to fill in the cut-off features with removable/sacrificial material and/or pattern conductive tracks, electrical or pneumatic features for integrated sensing and actuation. If needed, the build platform 401 is rotated left to face the milling spindle 301. The milling spindle 301 loaded with the milling tool is then used to face flat the work piece. After this step, the build platform 401 is rotated right to enter the housing 500 of the post-processing module 501, where compressed air from the fluid providing means 509 is used for removing any machined chips. The build platform 401 is rotated left and a measuring tool, in particular a touch probe, which has been loaded in the meantime on the milling spindle 301 is used for verifying partial work piece dimensions, accuracy, and planarity. Following this step, the build platform 401 is rotated downwards so that photopolymerization three-dimensional printing can be continued. The above steps can be repeated as needed to create the work piece. The outer surfaces of the work piece are then finished off by using a milling tool mounted to the milling spindle 301, the work piece is cleaned by wet washing in the material receiving container 202 of the container module 200 and at the post-processing module 500 in order to get the lab-on-a-chip device. The build platform 201 holding the lab-on-a-chip device is then removed from the machine tool 1 and, following that, the lab-on-a-chip device is removed from the build platform 201. After cleaning the machine tool 1 to get it ready for manufacturing a next three-dimensional part, a different build platform 201 or the same build platform 201 can be fixed to the arm 441 of the platform module 400.

A second sequencing example refers to manufacturing of an embedded electronic device, which can either be a macro-part with micro-features or a micro-part.

The manufacturing process can start either by using vat photopolymerization or extrusion three-dimensional printing to build a base (insulation) of the embedded electronic device. Inkjet three-dimensional printing with conductive inks by the extrusion and/or inkjet printhead module 600 can be used to create the cabling in three dimensions within the base. CNC milling performed by the CNC processing module 300 can be used for opening and cleaning up volumes to receive sensors, electronic and mechanical parts. Extrusion three-dimensional printing by the extrusion and/or inkjet printhead module 600 can seal and insulate any electrical/electronic elements. These operations may succeed each other as needed. Post-processing of the base at the post-processing module 500 and washing of the base by a washing liquid in the material receiving container 202 can also be used, when needed. The same stands for measurements using measuring tools attached to the milling spindle 301 of the CNC processing module 300.

A third sequencing example refers to coating of a work piece, usually considered as macro-part with micro-features.

The build platform 401 is loaded with an external work piece or a work piece that is currently being processed. The build platform 401 may be positioned such that it faces the extrusion and/or inkjet printhead module 600. For this purpose, the build platform 401 may be rotated upwards from a neutral position. The extrusion or the inkjet head of the extrusion and/or inkjet printhead module 600 can be used to coat a planar or a curved surface of the work piece, while the post-processing module 500 or the material receiving container 202 can be used for cleaning or chemical reaction purposes. The previous steps may be repeated as many times as needed for creating the necessary coating thickness. The build platform 401 can then be rotated to the left to finish the coated surface with a milling cutting tool mounted to the milling spindle 301 of the CNC processing module 300. The milling spindle 301 can be used with a milling tool to cut/engrave and/or a measuring tool to measure the work piece. Alternatively, the material receiving container 202 can be used for dip coating of external surfaces of the work piece with continuous production and accurate dipping times. Series of coatings with multiple material receiving containers 202 and multilayer coatings can be applied to the work piece using the container module 200, while intermediate or final coatings can be applied to the work piece by using the extrusion and/or inkjet printhead module 600. This has applications in novel antibiotic coatings and in surface modifications for DNA synthesis.

A fourth sequencing example refers to manufacturing of a multi-material and multi-functional part, which can either be a macro-part with micro-features or a micro-part.

A pre-loaded or an empty build platform 401 can be used in this case. The build platform 401 may be positioned such that it faces the extrusion and/or inkjet printhead module 600. For this purpose, the build platform 401 can be rotated upwards from a neutral position. Then, the extrusion or the inkjet head may be used to apply material on the build platform 401, if an empty build platform 401 is used, or on a work piece loaded on the build platform 401, if a pre-loaded build platform 401 is used. Alternatively, the build platform 401 may be positioned such that it faces the vat photopolymerization three-dimensional printing module 100. For this purpose, the build platform 401 may be rotated downwards from a neutral position. Then, photopolymerization three-dimensional printing on the build platform 401 or on the work piece loaded on the build platform 401 may be performed. When a pre-loaded build platform 401 is used, a cutting process, in particular by using a milling tool, performed on the work piece for flattening a surface, on which it will be printed, and post-processing are preferably executed before any extrusion or inkjet 3D printing stage or photopolymerization three-dimensional printing stage. Thus, optimum layer bonding results and part integrity can be obtained. Heads in the extrusion and/or inkjet printhead module 600 can be changed either between layers to be printed or different sections of a layer to be printed. Special heads can offer on-line mixing of multiple materials for varying concentrations along planar or curved layers. Between 3D printing stages, CNC cutting stages can be used for creating features or for making space for installing electronic or mechanical parts and sensors.

In addition to the foregoing description of the present invention, for an additional disclosure explicit reference is taken to graphic representation of figures 1 to 15.

### List of reference signs

- 1: machine tool
- 10: milling tool

- 100: vat photopolymerization three-dimensional printing module
- 101: illumination device
- 102: second illumination device moving means
- 103: first illumination device moving means
- 104: illumination device frame
- 105: guiding means
- 106: illumination device base
- 107: guiding means
- 111: second printing-module directional axis
- 112: first printing-module directional axis
- 120: electric motor
- 121: motion transmitting means
- 122: linear actuating element
- 130: electric motor
- 131: motion transmitting means
- 132: linear actuating element
- 150: linear guide
- 170: linear guide

- 200: container module
- 201: photopolymer receiving container
- 202: material receiving container
- 203: container support
- 204: container module moving means
- 205: guiding means
- 240: electric motor
- 241: motion transmission means
- 242: linear actuating element
- 250: linear guide
- 300: CNC processing module
- 301: milling spindle
- 302: frame
- 303: support table
- 304: electric motor
- 305: motion transmitting means
- 306: guiding means
- 307: electric motor
- 308: motion transmitting means
- 309: guiding means
- 310: milling spindle axis
- 311: first CNC processing module directional axis
- 312: second CNC processing module directional axis
- 313: third CNC processing module directional axis
- 314: first CNC processing module moving means
- 315: second CNC processing module moving means
- 316: third CNC processing module moving means
- 320: rotary stage
- 321: rotary stage motor
- 322: milling spindle holder
- 323: support plate
- 324: milling spindle plate
- 350: linear actuating element
- 351: belt
- 352: pulley
- 360: linear guide
- 380: linear actuating element
- 381: belt
- 382: pulley
- 390: linear guide

- 400: platform module
- 401: build platform
- 402: platform module moving means
- 403: plate
- 404: build platform support
- 405: guiding means
- 406: attaching region
- 411: first platform-module directional axis
- 412: second platform-module directional axis
- 413: third platform-module directional axis
- 420: electric motor
- 421: motion transmitting means
- 440: base
- 441: arm
- 442: electric motor
- 443: electric motor
- 450: linear guide

- 500: post-processing module
- 501: housing
- 502: side
- 503: side
- 504: side
- 505: side
- 506: side
- 507: side
- 508: UV-light illumination device
- 509: fluid providing means
- 510: compressed air escape hole

- 600: extrusion and/or inkjet printhead module
- 601: frame
- 602: electric motor
- 603: support table (there are 2, one in each linear guide in 1002 direction)
- 604: motion transmitting means
- 605: guiding means
- 606: head mount arrangement
- 607: electric motor
- 608: motion transmitting means
- 609: guiding means
- 611: first printhead moving means
- 612: second printhead moving means
- 641: first belt
- 642: rod
- 643: second belt
- 650: linear guide
- 660: head mount
- 670: head
- 671: extrusion print head
- 672: inkjet print head
- 673: laser head
- 674: syringe for bio-plotting
- 680: belt
- 690: linear guide

- 700: automatic tool change module
- 701: rotary disc
- 702: tool holder
- 703: receiving arm
- 704: automatic tool change module directional axis
- 705: electric motor
- 706: mounting frame

- 800: support body
- 801: support frame
- 802: chamber

- 900: disinfecting unit

- 1000: control means
- 1001: first direction
- 1002: second direction
- 1003: third direction
- 1004: fourth direction
- 1005: fifth direction
- 1010: angle
- 1011: angle

## Claims

1. A multiple-axis hybrid manufacturing machine tool (1) for manufacturing a three-dimensional part, in particular a micro-part and/or a macro-part with a micro-feature, wherein the multiple-axis hybrid manufacturing machine tool (1) extends in a first direction (1001), a second direction (1002) and a third direction (1003) that are perpendicular to each other and comprises:
• a vat photopolymerization three-dimensional printing module (100) comprising a movable illumination device (101),
• a container module (200) comprising at least one photopolymer receiving container (201) for receiving a photopolymer in liquid phase,
• a CNC processing module (300) comprising a movable milling spindle (301) for holding a milling tool and/or a measuring tool, and
• a platform module (400) comprising a movable build platform (401) that is arranged and configured for vat photopolymerization three-dimensional printing of a work piece and/or on a work piece, and preferably also for CNC processing of a work piece, on the build platform (401).

2. The multiple-axis hybrid manufacturing machine tool (1) according to claim 1,
wherein the movable build platform (401) is configured to linearly move in the third direction (1003), preferably wherein the linear movement of the build platform (401) in the third direction (1003) is continuously controllable,
and/or
wherein the movable build platform (401) is configured to rotate around the second direction (1002), and preferably also around the third direction (1003), preferably wherein the rotational movement of the build platform (401) around the third direction (1003), and in particular also around the second direction (1002), is continuously controllable.

3. The multiple-axis hybrid manufacturing machine tool (1) according to any of the preceding claims, wherein the movable build platform (401) is interchangeable,
and/or
wherein the movable build platform (401) is configured to support a work piece to be processed by the milling tool and/or measured by the measuring tool.

4. The multiple-axis hybrid-manufacturing machine tool (1) according to any of the preceding claims, wherein the movable illumination device (101) is configured to linearly move in the third direction (1003), and in particular also in the second direction (1002), preferably wherein the linear movement of the movable illumination device (101) in the third direction (1003), and in particular also in the second direction (1002), is/are controllable continuously or in steps or in an indexed manner.

5. The multiple-axis hybrid manufacturing machine tool (1) according to any of the preceding claims, wherein the at least one photopolymer receiving container (201) is configured to linearly move and/or indexed in the first direction (1001).

6. The multiple-axis hybrid-manufacturing machine tool (1) according to any of the preceding claims, wherein the container module (200) comprises at least one material receiving container (202) for receiving a washing liquid and/or a coating agent.

7. The multiple-axis hybrid manufacturing machine tool (1) according to claim 6, wherein the at least one material receiving container (202) is configured to linearly move and/or indexed in the first direction (1001), in particular wherein the at least one photopolymer receiving container (201) and the at least one material receiving container (202) are configured such they are linearly movable and/or indexed together in the first direction (1001).

8. The multiple-axis hybrid manufacturing machine tool (1) according to any of the preceding claims, wherein the milling spindle (301) is configured to linearly move in the first direction (1001) and/or second direction (1002) and/or to rotate around the third direction (1003), preferably wherein the linear movement of the milling spindle (301) in the first direction (1001) and/or in the second direction (1002) and/or the rotational movement of the milling spindle (301) around the third direction (1003) is/are continuously controllable, and/or wherein the milling spindle (301) is configured to drive the milling tool around a milling spindle axis (310) for performing a cutting process on a work piece,
or
wherein the milling spindle (301) is configured to linearly move in a fourth direction (1004) tilted with respect to the first direction (1001) and/or second direction (1002) and/or to rotate around a fifth direction (1005) that is perpendicular to the fourth direction (1004), preferably wherein the linear movement of the milling spindle (301) in the fourth direction (1004) and/or in the second direction (1002) and/or the rotational movement of the milling spindle (301) around the fifth direction (1005) is/are continuously controllable, and/or wherein the milling spindle (301) is configured to drive the milling tool around a milling spindle axis (310) for performing a cutting process on a work piece.

9. The multiple-axis hybrid-manufacturing machine tool (1) according to any of the preceding claims, further comprising a post-processing module (500),
wherein the post-processing module (500) comprises a UV-light illumination device (508) and/or a fluid providing means (508) for providing a fluid, in particular a gas, which is/are preferably arranged inside a housing (501) of the post-processing module (500), preferably wherein the housing (501) is stationary and/or configured to block UV-light.

10. The multiple-axis hybrid-manufacturing machine tool (1) according to claim 9, wherein the CNC processing module (300) is arranged on a first side of the platform module (400) in the first direction (1001) and the post-processing module (500) is arranged on a second side of the platform module (400) in the first direction (1001).

11. The multiple-axis hybrid manufacturing machine tool (1) according to any of the preceding claims, further comprising an extrusion and/or inkjet printhead module (600) with a head mount arrangement (606), wherein the head mount arrangement (606) comprises at least one movable head mount (660) for mounting at least one head (670), wherein the at least one head (670) comprises an extrusion print head and/or an inkjet print head, in particular wherein the at least one head also comprises a laser head and/or a syringe for bio plotting, preferably wherein the at least one movable head mount is configured to linearly move in the first direction (1001) and/or the second direction (1002).

12. The multiple-axis hybrid manufacturing machine tool (1) according to claim 11, wherein the vat photopolymerization three-dimensional printing module (100) is arranged on a first side of the platform module (400) in the third direction (1003) and the extrusion and/or inkjet printhead module (600) is arranged on a second side of the platform module (400) in the third direction (1003).

13. The multiple-axis hybrid manufacturing machine tool (1) according to any of the preceding claims, further comprising an automatic tool change module (700), wherein the automatic tool change module (700) is configured to receive a milling tool and/or a measuring tool and/or comprises a rotary disc (701) configured to rotate, in particular in an indexed manner, around the second direction (1002).

14. The multiple-axis hybrid manufacturing machine tool (1) according to any of the preceding claims, comprising a support body (800), to which the vat photopolymerization three-dimensional printing module (100), the container module (200), the CNC processing module (300) and the platform module (400) are attached, in particular wherein each module of the multiple-axis hybrid manufacturing machine tool (1) is attached to the support body (800), and/or comprising a sealable and closable chamber (802), inside which the vat photopolymerization three-dimensional printing module (100), the container module (200), the CNC processing module (300) and the platform module (400) are arranged, in particular wherein each module of the multiple-axis hybrid manufacturing machine tool (1) is arranged inside the sealable and closable chamber (802).

15. The multiple-axis hybrid manufacturing machine tool (1) according to any of the preceding claims, further comprising a control means (900) for controlling the vat photopolymerization three-dimensional printing module (100) and/or the container module (200) and/or the CNC processing module (300) and/or the platform module (400), in particular for controlling each module of the multiple-axis hybrid manufacturing machine tool (1).
